# EUROPÄISCHE PATENTSCHRIFT

(11) **EP 3 079 222 B1**
(45) Veröffentlichungstag und Bekanntmachung des Hinweises auf die Patenterteilung: **12.06.2019**
(21) Anmeldenummer: 16164180.8
(22) Anmeldetag: 07.04.2016
(51) Int. Cl.: H02J 7/00

(54) **ENERGIEVERSORGUNGSVORRICHTUNG FÜR EIN BATTERIEMANAGEMENTSYSTEM**
ENERGY SUPPLY DEVICE FOR A BATTERY MANAGEMENT SYSTEM
DISPOSITIF D'ALIMENTATION EN ENERGIE POUR UN SYSTEME DE GESTION DE BATTERIE

(30) Priorität: 09.04.2015 DE 102015105429
(43) Veröffentlichungstag der Anmeldung: 12.10.2016
(73) Patentinhaber: INTILION GmbH, 08056 Zwickau (DE)
(72) Erfinder: Fuchs, Dipl.-Ing. Andreas, 04229 Leipzig (DE); Winkler, Norman, 08056 Zwickau (DE)
(74) Vertreter: Bals, Rüdiger

(56) Entgegenhaltungen:
- EP-A1- 2 688 175
- DE-A1- 10 056 795
- US-A1- 2012 013 189
- US-A1- 2012 162 828

## Beschreibung

Die vorliegende Erfindung betrifft eine Energieversorgungsvorrichtung für ein Batteriemanagementsystem eines Batteriesystems. Ferner bezieht sich die Erfindung auf ein Batteriemanagementsystem sowie ein Verfahren zum Betreiben eines Batteriemanagementsystems.

Es ist aus dem Stand der Technik bekannt, dass bei Batteriesystemen zur Erhöhung der Sicherheit Batteriemanagementsysteme eingesetzt werden können. Die Batteriemanagementsysteme sind in der Lage, Parameter (z. B. Strom und Spannung) des Batteriesystems zu überwachen, um so den Energiespeicher vor Beschädigungen wie z. B. durch eine Tiefenentladung zu schützen. Hierzu wird bei einem kritischen Zustand des Batteriesystems die Energieversorgung zum Verbraucher unterbrochen, d. h. insbesondere der Verbraucherstromkreis des Batteriesystems getrennt.

Die Energieversorgung des Batteriemanagementsystems wird allerdings im Normalfall ebenfalls dem Energiespeicher entnommen. Nach einer Entladung des Batteriesystems, z. B. auch bei einer längeren Einlagerung, führt dies dazu, dass aufgrund des Energieverbrauchs des Batteriemanagementsystems der Energiespeicher in die Tiefenentladung geraten kann. Dies erfolgt dann unabhängig von einer Unterbrechung des Stromkreises, d. h. der Energieversorgung zum Verbraucher. Dieser Zustand birgt ggf. ein Sicherheitsrisiko und sollte folglich vermieden werden. Hierzu wird das Batteriemanagementsystem bzw. eine Energieversorgungsvorrichtung des Batteriemanagementsystems üblicherweise manuell deaktiviert.

Nachteilhaft bei den bekannten Lösungen ist, dass herkömmliche Energieversorgungsvorrichtungen nur einen unzuverlässigen und/oder unkomfortablen Schutz des Batteriesystems, z. B. durch das manuelle Deaktivieren des Batteriemanagementsystems erlauben. Auch sind bekannte Energieversorgungsvorrichtungen oft (kosten-) aufwendig in der Herstellung und im Betrieb. Dabei ist oft ein Problem, dass das manuelle Deaktivieren vergessen wird und somit z. B. bei einer Einlagerung des Batteriesystems bzw. Energiespeichers sich ein kritischer Zustand ergibt.

Die DE 100 56 795 A1 zeigt eine Vorrichtung zur Vermeidung der Tiefentladung eine Autobatterie.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Energieversorgungsvorrichtung bereitzustellen, welche einen komfortableren, kostengünstigeren und/oder sicheren Betrieb eines Batteriemanagementsystems und/oder Batteriesystems erlaubt, und insbesondere gleichzeitig zuverlässig vor kritischen Zuständen, wie der Tiefenentladung, schützt.

Die voranstehende Aufgabe wird gelöst durch eine Energieversorgungsvorrichtung mit den Merkmalen des Anspruchs 1, ein Batteriemanagementsystem mit den Merkmalen des Anspruchs 6 sowie durch ein Verfahren mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Energieversorgungsvorrichtung beschrieben sind, selbstverständlich auch im Zusammenhang mit dem erfindungsgemäßen Batteriemanagementsystem sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Energieversorgungsvorrichtung für ein Batteriemanagementsystem eines Batteriesystems, insbesondere eines wiederaufladbaren Lithium-Ionen-Batteriesystems und/oder Lithium-Batteriesystems. Hierbei ist vorgesehen, dass die Energieversorgungsvorrichtung eine Erhaltungsvorrichtung zur Erhaltung der Energieversorgung, insbesondere Strom- und/oder Spannungsversorgung, für das Batteriemanagementsystem umfasst, wobei die Erhaltungsvorrichtung ein Steuerungsmittel zur Ansteuerung (der Erhaltungsvorrichtung) aufweist, und die Erhaltungsvorrichtung über das Steuerungsmittel derart mit dem Batteriemanagementsystem verbindbar ist, dass eine Erhaltung und Unterbrechung der Energieversorgung durch das Batteriemanagementsystem aktiv durchführbar ist. Dabei kann eine Erhaltung und Unterbrechung der Energieversorgung (d. h. insbesondere lediglich ein Deaktivieren der Energieversorgung) durch das Batteriemanagementsystem selbst erfolgen, wohingegen vorzugsweise die Aktivierung (d. h. Herstellung) der Energieversorgung manuell erfolgen muss. Mit anderen Worten ist insbesondere ein automatisches Deaktivieren der Energieversorgung sowie ein manuelles Aktivieren und Deaktivieren der Energieversorgung des Batteriemanagementsystems vorgesehen. Hierdurch kann die Energieversorgung zuverlässig bei einem kritischen Zustand unterbrochen werden, so dass eine Beschädigung des Batteriesystems vermieden wird. Die Unterbrechung bzw. Deaktivierung der Energieversorgung durch das Batteriemanagementsystem bezieht sich dabei insbesondere auf eine vollständige und/oder teilweise Unterbrechung, z. B. auch auf eine Reduzierung der Energieversorgung und/oder eine hinreichende Unterbindung des Stromflusses derart, dass eine Tiefenentladung vermieden wird. Die Energieversorgung ist dabei bspw. eine Strom- und/oder Spannungsversorgung zum Betreiben von Kernfunktionen des Batteriemanagementsystems, wie z. B. sämtlichen Funktionen zur Überwachung von Parametern des Batteriesystems und/oder zur Steuerung des Batteriesystems. Weiter kann die Energieversorgung ggf. auch die Strom- und/oder Spannungsversorgung des gesamten Batteriemanagementsystems betreffen, so dass beim Ausbleiben der Energieversorgung (bzw. Unterbrechung) das gesamte Batteriemanagementsystem vollständig funktionsunfähig ist (ggf. mit Ausnahme von Teilen der Energieversorgungsvorrichtung und/oder einer Versorgungseinheit). Weiter ist denkbar, dass sowohl die Energie für die Energieversorgung des Batteriemanagementsystems als auch für eine (davon ggf. unabhängige) Energieversorgung der Energieversorgungsvorrichtung dem Energiespeicher entnommen wird.

Das Steuerungsmittel kann vorzugsweise als elektrische Leitung und/oder als Schnittstelle und/oder als Potential und/oder als elektrischer Eingang und/oder als Kontakt und/oder als Stecker oder dergleichen ausgebildet sein. Über das Steuerungsmittel erfolgt insbesondere eine Ansteuerung der Erhaltungsvorrichtung durch das Batteriemanagementsystem, insbesondere einer Elektronikkomponente des Batteriemanagementsystems. Durch die Erhaltungsvorrichtung erfolgt vorzugsweise eine Steuerung der Energieversorgung, insbesondere durch eine Erhaltung und Unterbrechung, welche aktiv von dem Batteriemanagementsystem angesteuert wird. Weiter kann es vorgesehen sein, dass das Steuerungsmittel nicht zwangsläufig als separates Bauteil ausgebildet ist, sondern bspw. als eine Schaltanordnung und/oder als ein funktioneller Teil davon ausgebildet ist. Weiter kann das Steuerungsmittel auch in der Erhaltungsvorrichtung und/oder im Batteriemanagementsystem und/oder in der Energieversorgungsvorrichtung (insbesondere als funktioneller Bestandteil) integriert sein. Die Verbindung der Erhaltungsvorrichtung über das Steuerungsmittel mit dem Batteriemanagementsystem bezieht sich dabei insbesondere auf eine (dauerhafte oder unstetige) elektrische Verbindung, wobei entscheidend ist, dass ein elektrischer Energieaustausch zwischen der Erhaltungsvorrichtung und dem Batteriemanagement erfolgt. Dies kann bspw. ein elektrisches Signal sein (z. B. eine Spannung und/oder ein Strom), um die Energieversorgung aufrecht zu erhalten oder zu unterbrechen. So ist es z. B. denkbar, dass ein z. B. kodiertes Kommunikationssignal über das Steuerungsmittel übertragen wird, wobei z. B. ein erstes Kommunikationssignal die Aufrechterhaltung und ein zweites Kommunikationssignal den Wegfall bzw. die Unterbrechung der Energieversorgung bewirkt. Auch kann es möglich sein, dass ein TTL-Signal (Transistor-Transistor-Logik) vom Batteriemanagementsystem über das Steuerungsmittel zur Erhaltungsvorrichtung übertragen wird. So kann kostengünstig und zuverlässig die Erhaltungsvorrichtung angesteuert werden.

Es ist besonders vorteilhaft, wenn das Batteriemanagementsystem zur Erhaltung der Energieversorgung aktiv ein elektrisches Signal über das Steuerungsmittel an die Erhaltungsvorrichtung überträgt. So kann bspw. ein Aktiv-Signal ("Enable"-Signal) genutzt werden, wobei während des Vorliegens des Aktiv-Signals die Energieversorgung erhalten bleibt. Auch ist es ggf. möglich, dass eine Unterbrechung der Energieversorgung aktiv durch eine Unterbrechung des Aktiv-Signals durch das Batteriemanagementsystem erfolgt. Die Übertragung und/oder die Unterbrechung der Übertragung des Signals wird bspw. durch die Erhaltungsvorrichtung aktiv interpretiert und in eine Erhaltung und/oder Unterbrechung der Energieversorgung umgesetzt. Alternativ oder zusätzlich ist es denkbar, dass das Signal selbst (aktiv und/oder direkt) die Schaltung der Energieversorgungsvorrichtung bewirkt, z. B. aufgrund der schaltungstechnischen Anordnung des Steuerungsmittels. Die Übertragung und/oder der Wegfall des Signals kann bspw. aktiv und/oder direkt das Schalten eines Halbleiterschalters, wie eines Feldeffekttransistors bewirken. Der Halbleiterschalter kann insbesondere zuverlässig und effizient die Energieversorgung bewirken bzw. aufrechterhalten und/oder bei einer Änderung des Signals (z. B. einem Wegfall des Aktiv-Signals) die Energieversorgung unterbinden. Hierzu unterbindet bzw. sperrt der Halbleiterschalter den Stromfluss bzw. wird leitend geschaltet, um den Stromfluss zur Energieversorgung zuzulassen.

Unter einem elektrischen Energiespeicher wird insbesondere eine Batterie, d. h. vorzugsweise ein wiederaufladbarer insbesondere elektrochemischer Energiespeicher und/oder Sekundärbatterie verstanden. Der Energiespeicher kann somit mehrfach geladen und entladen werden, wobei bspw. die chemischen Reaktionen zur Energieerzeugung reversibel verlaufen. Dabei kann der Energiespeicher sowohl zur Speicherung von elektrischer Energie als auch als Energiequelle in einem Stromkreis mit einer externen Komponente, wie einer Last und/oder einem Verbraucher und/oder einem Wechselrichter dienen. Über diesen Stromkreis fließt dann der Lade- und/oder Entladestrom und/oder Batteriestrom (Verbraucherstrom) zum Betrieb der Komponente und/oder zum Aufladen des Energiespeichers. Die Komponente kann dabei bspw. eine aktive Komponente und/oder ein Wechselrichter z. B. eines Photovoltaiksystems sein. Weiter kann die Komponente z. B. einen Wechselrichter und/oder einen Umrichter und/oder ein Motorsteuergerät und/oder wenigstens einen (kapazitiven) Verbraucher und/oder weitere Geräte z. B. zur Aufladung des Energiespeichers und/oder Steuerung des Lade- und/oder Entladestroms und/oder zur Netzeinspeisung aufweisen. Dabei kann z. B. durch und/oder über die Komponente Energie, insbesondere der Ladestrom, zum Batteriesystem zur Aufladung des Energiespeichers fließen. Hierdurch ist es möglich, dass der Energiespeicher z. B. Solarstrom zwischenspeichert. Weiter ist es denkbar, dass der Energiespeicher an und/oder über die Komponente Energie, d. h. insbesondere der Entladestrom, zum Betrieb der Komponente oder weiterer Verbraucher oder zur Einspeisung in das Netz ausgibt. Der Lade- und/oder Entladestrom, d. h. insbesondere der Batteriestrom, fließt dabei durch die Leitungen des Stromkreises des Energiespeichers, d. h. insbesondere ein Verbraucherstromkreis.

Der Stromkreis, d. h. die elektrische Verbindung zwischen dem Energiespeicher und der Komponente, kann beispielsweise über Verbindungskontakte hergestellt werden, welche insbesondere als Endableitung ausgebildet oder mit solchen verbunden sind. Die Verbindungskontakte sind beispielsweise Metallkontakte, welche eine Beschichtung (z. B. mit Zinn und/oder Gold und/oder Nickel) zur Verbesserung der Leitfähigkeit aufweisen.

Weiter ist es auch denkbar, dass der Energiespeicher für den Betrieb von Fahrzeugen und/oder Flurförderfahrzeugen und/oder Elektrofahrzeugen und/oder Elektromotoren, insbesondere als Traktionsbatterie ausgebildet ist. Auch der Betrieb des Energiespeichers an einem Wechselrichter, insbesondere Solarwechselrichter, beispielsweise in einem Photovoltaiksystem kann vorgesehen sein. Hier sind insbesondere Lithiumbatterien aufgrund ihrer hohen Leistungsdichte besonders geeignet. Eine weitere mögliche Anwendung des Energiespeichers ist z. B. der Einsatz als unterbrechungsfreie Stromversorgung.

Der Energiespeicher ist und/oder umfasst bevorzugt wenigstens eine Batterie, wobei unter Batterie im Rahmen der Erfindung insbesondere eine Sekundärbatterie bzw. ein Akkumulator verstanden wird. Der Energiespeicher kann dabei auch eine Zusammenschaltung mehrerer Batterien aufweisen. Unter Batterie wird dabei insbesondere eine Zusammenschaltung mehrerer galvanische Zellen (insbesondere Batteriezellen) verstanden, wobei die Zellen den Batteriestrom durch eine chemische Reaktion erzeugen. Die einzelnen Zellen werden bevorzugt zusammengefasst, beispielsweise in einer Parallelschaltung und/oder in einer seriellen Schaltung elektrisch miteinander verbunden, sodass auf diese Weise ein Zellpaket entsteht. Weiter weist der Energiespeicher ggf. ein Elektrolyt auf, welches z. B. auf Polymerbasis vorliegt. Der Energiespeicher ist insbesondere eine Lithiumbatterie, vorzugsweise Lithium-Ionen-Batterie (Lithium-Ionen-Akkumulator) und/oder eine Lithium-Polymer-Batterie und/oder eine Lithium-Cobaltdioxid-Batterie und/oder eine Lithium-Titanat-Batterie und/oder eine Lithium-Luft-Batterie und/oder eine Lithium-Mangandioxid-Batterie und/oder eine Lithium-Eisenphosphat-Batterie und/oder eine Zinn-Schwefel-Lithium-Ionen-Batterie und/oder dergleichen. Die Lithiumbatterie zeichnet sich durch einen sehr geringen Innenwiderstand und durch hohe Leistungsfähigkeit auch bei geringeren Kapazitäten aus. Sie lässt dabei eine nahezu vollständige Entladung zu und weist eine hohe Energie- und Leistungsdichte auf.

Ein Batteriesystem umfasst zumindest eine oder mehrere Zellen und/oder ein oder mehrere Zellpakete. Bevorzugt weist das Batteriesystem zumindest ein Zellpaket mit mindestens 8 Zellen und/oder maximal 16 Zellen und/oder maximal 24 Zellen auf. Durch eine Zusammenschaltung der Zellen ist eine besonders einfache und kostengünstige Skalierung des Batteriesystems möglich. Das Batteriesystem, insbesondere als wiederaufladbares Batteriesystem, weist vorzugsweise zumindest einen wiederaufladbaren Energiespeicher auf. Bei einem Lithium-Ionen-Batteriesystem ist dabei zumindest eine wiederaufladbare Lithiumbatterie als Energiespeicher vorgesehen. Das Batteriesystem umfasst ferner Kontakte zur Verbindung mit der externen Komponente, z. B. einen ersten Verbindungskontakt am Minuszweig und einen zweiten Verbindungskontakt am Pluszweig des Energiespeichers. Die Verbindungskontakte bilden somit vorzugsweise die Klemmen des als Energiequelle eingesetzten Energiespeichers, wobei im nicht angeschlossenen Zustand (offener Stromkreis) an den Verbindungskontakten die Leerlaufspannung anliegt. Auch ist beispielsweise ein Hauptschalter zum manuellen Schließen und/oder Unterbrechen des Stromkreises vorgesehen, um die elektrische Energieversorgung bzw. den elektrischen Energieaustausch mit der Komponente herzustellen oder zu unterbrechen. Der Hauptschalter dient also vorzugsweise dazu, den Batteriestrom vollständig zu unterbinden. Die maximale Ausgangsspannung und/oder Leerlaufspannung und/oder Nennspannung des Batteriesystems beträgt z. B. maximal 12 V und/oder 26 V und/oder 50 V. Weiter liegt die Nennspannung der einzelnen Zellen im Bereich von 2 bis 5 V, insbesondere 2,9 bis 3,7 V.

Das Batteriesystem, insbesondere Lithium-Batterie-System, wird vorzugsweise mit aktiven Komponenten verwendet. Als Komponenten werden beispielsweise Motorsteuergeräte für Traktionsanwendungen (d. h. Industrieanwendungen, Kleintraktion und Flurförderfahrzeuge und dergleichen), Um- und/oder Wechselrichter zusammen mit dem Batteriesystem genutzt. Die Komponente ist dabei wiederum typischerweise mit weiteren Komponenten, wie einem Solar-Panel oder Verbrauchern verbunden, wie einem Motor oder einem Anschlussnetz. Das Batteriesystem ermöglicht dabei beispielsweise die Zwischenspeicherung des Solarstroms und somit einen besonders energieeffizienten Betrieb einer Photovoltaikanlage.

Die Stromversorgung der Komponente und/oder der elektrische Energieaustausch zwischen der Komponente und dem Batteriesystem (d. h. insbesondere mit den einzelnen Batterien und/oder Zellen und/oder Energiespeichern des Batteriesystems) erfolgt vorzugsweise durch eine Zusammenschaltung der Komponente mit dem Batteriesystem in dem Stromkreis des Energiespeichers. Die Komponente wird hierzu z. B. an den Verbindungskontakten elektrisch mit dem Batteriesystem verbunden und ggf. zumindest ein Schalter wie ein Hauptschalter des Batteriesystems geschlossen, derart, dass der Stromkreis ebenfalls geschlossen wird, und ein Stromfluss (des Batteriestroms, d. h. beispielsweise des Lade- und/oder Entladestroms) möglich ist. Hierdurch wird ein sicherer Betrieb gewährleistet.

Als Komponente können z. B. Stromrichter, wie ein Gleichspannungswandler, ein Wechselrichter und insbesondere ein Solarwechselrichter eingesetzt werden. Unter Wechselrichter wird insbesondere ein elektrisches Gerät verstanden, welches Gleichspannung in Wechselspannung umrichtet. Zur Steigerung des Wirkungsgrades wird hier bevorzugt ein Wechselrichter mit Halbleitern, insbesondere aus Siliziumkarbid genutzt, besonders bevorzugt getaktet, um einen zuverlässigen Betrieb mit geringen Verschleiß zu ermöglichen. Der Wechselrichter kann als ein elektrisches Gerät mit Transformatoren zur galvanischen Trennung oder transformatorlos und daher mit hohem Wirkungsgrad ausgestaltet sein. Der Transformator ermöglicht dabei eine galvanische Trennung zwischen dem Gleichstromsystem (dem Batteriesystem) und dem Wechselstromsystem. Vorzugsweise wird ferner ein selbstgeführter Wechselrichter eingesetzt, um durch eine eigene Taktquelle unabhängig vom Netz betrieben zu werden, wobei ggf. am Wechselrichter zumindest ein Wechselstromverbraucher betrieben wird. Insbesondere erfolgt durch den Wechselrichter eine Anpassung des Batteriestroms (des Batteriesystems) an Netzbedingungen, d. h. an z. B. 230 V Wechselspannung und an eine Frequenz von z. B. 50 Hz. Optional kann der Wechselrichter auch einen MPP-Regler (Maximum Power Point Tracking) für die Anpassung des Wechselrichters an den Punkt der maximalen Leistung aufweisen, vorzugsweise zum Betrieb mit einer Photovoltaik-Anlage eines Photovoltaiksystems zum Betreiben der Solarzellen im Leistungsmaximum. Hierzu weist der Wechselrichter vorzugsweise aktive und/oder integrierte Bauelemente, wie z. B. Mikroprozessoren auf. Das Batteriesystem ist hierbei vorzugsweise dazu geeignet und ausgelegt, Solarstrom des Photovoltaiksystems (d. h. der Solarzellen) zwischenzuspeichern. Das Batteriesystem kann beispielsweise bis zu 2,5 kWh, 5 kWh und/oder bis zu 10 kWh speichern. Somit ist ein besonders effizienter Betrieb der Photovoltaikanlage möglich.

Die Komponente kann ferner auch ein Kommunikationssystem aufweisen, z. B. ein Bussystem (wie einen CAN- und/oder SPI-Bus), welches zur Datenkommunikation mit externen Geräten und/oder einem Batteriemanagementsystem des Batteriesystems genutzt wird. CAN steht hierbei für "Controller Area Network" und SPI für "Serial Peripheral Interface"-Bus. Dies ermöglicht eine einfache Überwachung und Steuerung der Komponente.

Aufgrund ihres Aufbaus und der aktiven Steuerung weisen solche Komponenten eine Eingangskapazität auf. Bei einem Anschluss des Batteriesystems mit der Komponente muss die Eingangskapazität vorgeladen werden, um die Einschaltströme zu begrenzen und einen sichereren Betrieb zu gewährleisten. Bevorzugt kommt hierzu eine Ladevorrichtung des Batteriesystems zum Einsatz. Die Vorladung durch die Ladevorrichtung erfolgt dabei vorteilhafterweise bereits bevor die vollständige Energieversorgung durch das Batteriesystem hergestellt wird (z. B. durch Betätigung eines Hauptschalters des Batteriesystems) durch einen möglichst konstanten und hohen Vorladestrom. Zur Vorladung wird beispielsweise durch einen Benutzer zunächst ein Vorladeschalter (Precharge-Schalter) zum Schließen eines Vorladestromkreises aktiviert, bevor der Hauptschalter aktiviert wird. Dabei wird der Vorladestrom insbesondere wie der eigentliche Batteriestrom dem zumindest einen Energiespeicher des Batteriesystems entnommen. Hier kann auch eine Kontrolleinheit vorgesehen sein, welche z. B. erst nach durchgeführter Vorladung eine Betätigung des Hauptschalters und/oder ein Schließen des Stromkreises (zum Betrieb der Komponente mit der Batterie) erlaubt, um so die Sicherheit noch weiter zu erhöhen. Hierbei unterscheiden sich somit der Vorladestromkreis zur Vorladung von dem Stromkreis des Energiespeichers zum eigentlichen Betrieb der Komponente an dem Energiespeicher mit dem Batteriestrom (d. h. insbesondere der Lade- und/oder Entladestrom) dadurch, dass im Vorladestromkreis ausschließlich der (begrenzte) Vorladestrom fließt. Auch ist es denkbar, dass bei dem Stromkreis (d. h. dem Hauptstromkreis) immer ein nur durch den Energiespeicher selbst begrenzter Batteriestrom fließen kann, wobei der Vorladestrom des Vorladestromkreises zusätzlich begrenzt wird.

Überspannung, Überstrom, Kurzschlüsse, Überladen, Hitze und/oder mechanische Einwirkungen können kritische Zustände hervorrufen, welche zu einer Zerstörung des Energiespeichers führen. Bevorzugt ist daher das Batteriesystem aus Sicherheitsgründen mit einem Batteriemanagementsystem ausgestattet. Das Batteriemanagementsystem weist insbesondere eine Überwachungs-, Steuerungs-, und/oder Kommunikationsfunktionalität auf. Es ermöglicht so beispielsweise eine Überwachung von Parametern des Energiespeichers (d. h. auch des Batteriesystems und/oder der Umgebung des Batteriesystems), insbesondere eine Messwerterfassung am Batteriesystem bzw. an dem Stromkreis des Energiespeichers. Somit können Messgrößen wie (Batterie- und/oder Zell-) Strom, (Batterie- und/oder Zell-) Spannung, (Batterie- und/oder Zell-) Impedanz, Temperatur (z. B. der Zellen und/oder der Umgebung), Kapazität der Energiespeicherzellen und/oder des Energiespeichers und/oder Beschleunigungen erfasst und überwacht werden. Auch können der Ladezustand, Überladung, Überentladung und die Funktionsfähigkeit, z. B. durch Auswertung der erfassten Messgrößen (d. h der erfassten Messwerte) als Parameter ermittelt werden. Hierzu kommt beispielsweise zumindest eine Überwachungsvorrichtung zum Einsatz, welche die Messwerterfassung durchführt und ggf. auch auswertet. Die Überwachungsvorrichtung kann dabei insbesondere ein Überwachungssystem sein, welches z. B. wenigstens zwei (ggf. autonome und/oder separat ausgebildete) Überwachungseinheiten, jeweils ggf. mit weiteren Sensoren umfasst. Die Überwachungseinheiten müssen dabei nicht zwangsläufig identisch oder ähnlich ausgebildet sein, wobei eine erste Überwachungseinheit z. B. unterschiedlich zu einer zweiten Überwachungseinheit konstruiert ist. Somit können die Überwachungseinheiten einen unterschiedlichen spezialisierten Funktionsumfang aufweisen, welcher dem jeweiligen Anwendungszweck angepasst ist.

Bevorzugt kann die Auswertung der durch die Überwachungsvorrichtung (d. h. auch ggf. durch die Überwachungseinheiten) überwachten Parameter bzw. erfassten Messgrößen auch durch eine Ansteuerungseinheit und/oder durch eine Auswerte-Steuerungseinheit erfolgen. Besonders bevorzugt können durch die Messwerterfassung anhand der Auswertung der Parameter kritische Zustände des Batteriesystems und/oder der einzelnen Zellen (d. h. die Energiespeicherzellen z. B. von jedem Zellpaket des Batteriesystems bzw. Energiespeichers), wie ein Überstrom, Überspannung, eine kritische Temperatur oder eine drohende Tiefenentladung erkannt und/oder Gegenmaßnahmen eingeleitet werden. Auf Grundlage der Messwerterfassung wird beispielsweise der Stromkreis ganz oder teilweise (z. B. auch nur der Verbraucherstrom oder die Energieversorgung des Batteriemanagementsystems) unterbrochen. Somit kann die Sicherheit bei einem Betrieb des Batteriesystems deutlich gesteigert werden.

Vorzugsweise kann bei einem Eintreten und/oder Vorliegen eines kritischen Zustands, d. h. beispielsweise dem Überschreiten und/oder Unterschreiten eines kritischen Temperaturschwellenwerts und/oder bei einem Überschreiten und/oder Unterschreiten eines kritischen Spannungs- und/oder Stromschwellenwertes (d. h. einer Grenzwertverletzung), der Stromkreis, insbesondere Hauptstromkreis und/oder Verbraucherstromkreis, von dem Batteriesystem zum Verbraucher vollständig durch das Batteriemanagementsystem z. B. mittels zumindest einer Halbleiterschalteinheit und/oder einer Sicherheitsschalteinheit und/oder einer Überstromschutzeinrichtung unterbrochen werden. Die Schwellenwerte können somit einen oberen und einen unteren Schwellenwert aufweisen, wobei die Unterschreitung des unteren Schwellenwertes und die Überschreitung des oberen Schwellenwertes beide einen kritischen Zustand darstellen. Typischerweise kann der Schwellenwert für die Temperatur z. B. maximal -10 °C (Grad Celsius) oder 0 °C und der obere Schwellenwert z. B. mindestens 40 °C betragen. Somit können kritische Zustände effektiv erfasst und Schäden verhindert werden. Allerdings muss auch die Energieversorgung zum Batteriemanagementsystem stets gewährleistet sein, um die Messwerterfassung, Verarbeitung und Kommunikation stets zu ermöglichen. Daher erfolgt die Energieversorgung vorteilhafterweise durch den Energiespeicher.

Auch ist es denkbar, dass durch das Batteriemanagementsystem, insbesondere durch die Auswerte-Steuerungseinheit, der Zustand des Batteriesystems und/oder Energiespeichers ermittelt wird. Der Zustand ermöglicht es dabei beispielsweise, die Leistungsfähigkeit des Batteriesystems zu bestimmen Dabei können Parameter, insbesondere Messgrößen wie Temperatur und/oder Spannung und/oder Ladezustand und/oder weitere Parameter wie Alter des Energiespeichers, Zyklenzahl (Lade-Entlade-Zyklen), Spannungscharakteristik und Innenwiderstand herangezogen werden. Zur Auswertung und Speicherung dieser Daten weist das Batteriemanagementsystem beispielsweise einen mit der Auswerte-Steuerungseinheit verbundenen Datenspeicher auf. Dabei kann die Auswerte-Steuerungseinheit z. B. Algorithmen oder Auswerteverfahren nutzen und insbesondere elektronisch ausführen, um die Parameter zueinander in Beziehung zu setzen und den Zustand zu ermitteln.

Das Batteriemanagementsystem weist vorzugsweise auch ein Kommunikationssystem auf, z. B. ein Bussystem, welches zur (Daten-)kommunikation mit externen Geräten und/oder einer am Batteriesystem angeschlossenen Komponente genutzt wird. Das Bussystem weist insbesondere einen CAN-Bus und/oder SPI-Bus auf. Weiter kann das Batteriemanagementsystem eine Elektronik aufweisen, insbesondere die Auswerte-Steuerungseinheit, zumindest einen nicht-flüchtigen Datenspeicher und/oder Schnittstelleneinheiten (wie Datenschnittstellen), wobei die Auswerte-Steuerungseinheit und/oder die Schnittstelleneinheit z. B. als Mikrocontroller und/oder Mikroprozessor und/oder digitaler Signalprozessor und/oder integrierter Schaltkreis ausgebildet sind. Die Elektronik kann bevorzugt auf einer Platine des Batteriemanagementsystems angeordnet und/oder elektrisch miteinander verbunden sein. Auch kann vorgesehen sein, dass das Batteriemanagementsystem programmierbar ausgestaltet ist, und somit die Funktionalität variabel ergänzt und/oder modifiziert werden kann. Weiter ist auch die Kommunikation zu einer Displayeinheit denkbar, um z. B. Parameter und/oder den Zustand für einen Benutzer anzuzeigen. Zur Kommunikation, zum Auslesen des Datenspeichers und/oder zur Programmierung kann das Batteriemanagementsystem ferner Schnittstellen und/oder Verbindungen, insbesondere elektrisch leitende Steckverbindungen aufweisen. Der zumindest eine Datenspeicher kann dabei extern von der Auswerte-Steuerungseinheit angeordnet und/oder in der Auswerte-Steuerungseinheit integriert sein, und dabei z. B. als Flash-Speicher und/oder RAM (Random-Access Memory) und/oder SD-Speicher (Secure Digital Memory Card) oder dergleichen ausgebildet sein. Im Datenspeicher werden insbesondere die erfassten Parameter (ggf. als Protokoll und/oder mit Zeitstempeln) und/oder relevante Daten des Batteriesystems (auch Kenndaten und/oder Authentifizierungsinformationen) gespeichert. Die Kenndaten des Energiespeichers sind beispielsweise Zellenspannung, Temperaturempflindlichkeit, Zyklenlebensdauer, maximal erlaubter Lade- oder Entladestrom, welcher zur Überwachung und/oder Steuerung herangezogen und mit den Parametern bzw. erfassten Messwerten verglichen werden können (z. B. durch eine Auslesung des Datenspeichers durch die Auswerte-Steuerungseinheit). Auch ist es denkbar, dass das Batteriemanagementsystem eine Authentifizierungsfunktion z. B. zur Authentifizierung eines Benutzers aufweist, so dass die Nutzung des Batteriesystems nur bei erfolgreicher Authentifizierung gestattet wird. Auch kann das Batteriemanagementsystem zumindest eine Sicherheitseinheit aufweisen, welche den Betrieb des Batteriemanagementsystems überwacht und damit die Sicherheit weiter erhöht. Die Sicherheitseinheit und/oder das Batteriemanagementsystem können ferner unter Berücksichtigung eines Sicherheits-Integritätslevels (z. B. gemäß IEC 61508/IEC61511) konstruiert sein und/oder betrieben werden und entsprechende Anforderungsstufen erfüllen. Die Anforderungsstufen werden dabei auch nach SIL (Safety Integrity Level) Sicherheitsintegritätslevel klassifiziert. So weisen sicherheitskritische Komponenten des Batteriemanagementsystems, z. B. die Auswerte-Steuerungseinheit und/oder die Schalteinheiten und/oder die Überwachungsvorrichtung beispielsweise redundant ausgeführte Signalleitungen auf, um so die Sicherheitsanforderungen zu erfüllen.

Es kann vorgesehen sein, dass das Batteriemanagementsystem zur Steuerung des Batteriesystems eingesetzt wird. Unter Steuerung wird im Rahmen der Erfindung auch eine Regelung (mit einer Rückkopplung bzw. Rückführung in einer Regelstrecke) verstanden. Hierzu kann die Auswerte-Steuerungseinheit z. B. wenigstens einen Regler und/oder einen Laderegler (insbesondere ein Mikrocontroller mit Verbindung zur Überwachungsvorrichtung) zur Regelung (Steuerung) des Ladevorgangs aufweisen. So ist z. B. eine Limitierung und Steuerung von Lade- und Entladeströmen im Stromkreis des Energiespeichers möglich. Insbesondere weist das Batteriemanagementsystem zumindest ein Schalterelement, insbesondere Halbleiterschalter auf, um den Stromkreis zu schalten und/oder den Batteriestrom (insbesondere zu einer Komponente) zumindest in eine Richtung zu unterbinden. Durch die Ansteuerung des zumindest einen Schaltelementes kann beispielsweise auch die Einhaltung einer oberen und/oder unteren Spannungsgrenze und/oder einer oberen und/oder unteren Ladungsgrenze bewirkt werden, wobei hierzu bevorzugt die Zellspannungen durch die Überwachungsvorrichtung des Batteriemanagementsystems überwacht werden. Hierdurch entsteht insbesondere bei Lithium-Batterien ein deutlicher Vorteil, da diese nur in geringen Spannungsbereichen sicher betrieben werden können. Auch können ferner die ermittelten (d. h. gemessenen bzw. erfassten) Parameter ausgewertet und in Abhängigkeit von dieser Auswertung das zumindest eine Schaltelement angesteuert werden. Weiter ist es denkbar, dass in Abhängigkeit von den überwachten Parametern ein Kühlsystem des Batteriesystems durch das Batteriemanagementsystem angesteuert wird, insbesondere in Abhängigkeit von der Temperaturüberwachung. Weiter wird ggf. eine Steuerung des Lade- und Entladeprozesses, insbesondere auch für jede einzelne Zelle und/oder für das gesamte Batteriesystems bzw. den gesamten Energiespeicher, im Rahmen eines "Balancing" durch das Batteriemanagementsystem durchgeführt. Das Balancing ermöglicht beispielsweise eine Angleichung von ungleichen Ladungszuständen der einzelnen Zellen des Energiespeichers bzw. Batteriesystems. Hierzu erfolgt eine Auswertung der Überwachungsvorrichtung und/oder Steuerung der Schalteinheiten durch die Auswerte-Steuerungseinheit derart, dass eine Angleichung bewirkt wird. Die Überwachungsvorrichtung kann hierfür die Parameter für den Energiespeicher und/oder für die einzelnen Zellen des Energiespeichers erfassen. So können auch Parameter, wie die Kapazität des Energiespeichers und/oder der einzelnen Zellen, Betriebsdaten, Leckströme, die Ladungszustände (State of Charge, SOC) des Energiespeichers und/oder der einzelnen Zellen und/oder die Ruhespannung (Open Circuit Voltage, OCV) des Energiespeichers und/oder der einzelnen Zellen als Parameter erfasst werden. Somit kann die Lebensdauer und Leistung des Batteriesystems deutlich erhöht werden.

Die Schalteinheiten können beispielsweise als mechanische Schalter und/oder Taster und/oder Relais und/oder elektronische Schalter und/oder Halbleiterschalter und/oder dergleichen ausgebildet sein. Relais und/oder mechanische Schalter besitzen dabei den Vorteil, dass eine vollständige galvanische Trennung des Stromkreises erfolgen kann. Unter einer Halbleiterschalteinheit werden beispielsweise auch ein Halbleiterschalter, d. h. ein elektrisches Halbleiter-Bauelement, insbesondere ein Leistungshalbleiter und/oder ein Transistor und/oder ein Feldeffekttransistor und/oder ein MOSFET (metal oxide semiconductor field-effect transistor) und/oder Leistungs-MOSFET verstanden. Solche Halbleiterschalter zeichnen sich vorzugsweise dadurch aus, dass eine Unterbindung des Stromflusses nur für eine bestimmte Stromrichtung erfolgen kann. Dies ist besonders vorteilhaft für Anwendungen wie dem "Balancing", wobei ggf. ein erster Halbleiterschalter im positiven Strompfad (Pluszweig) und ein zweiter Halbleiterschalter im negativen Strompfad (Minuszweig) des Stromkreises integriert sind. Hierdurch kann beispielsweise der Lade- und/oder Entladestrom gesteuert werden, wobei z. B. entweder nur der Lade- oder nur der Entladestrom zugelassen wird. Die Steuerung erfolgt bevorzugt in Abhängigkeit von der Parameter-Überwachung (z. B. einer Überwachung der Kapazität durch die Überwachungsvorrichtung). Der Leistungshalbleiter und/oder Leistungs-MOSFET ist dabei bevorzugt für das Schalten und Unterbinden (d. h. Sperren) großer Ströme und Spannung geeignet, insbesondere Stromstärken bis maximal 50 A (Ampere) und/oder 100 A und/oder 200 A und/oder 500 A und/oder 800 A und/oder Spannungen bis maximal 1000 V (Volt).

Auch ist es denkbar, dass das Batteriemanagementsystem eine bauliche Einheit mit der Energieversorgungsvorrichtung bildet, wobei das Batteriemanagementsystem und die Energieversorgungsvorrichtung insbesondere lediglich funktionell unabhängig voneinander sind. Das Batteriemanagementsystem weist entsprechend die Energieversorgungsvorrichtung auf, welche z. B. auf einer Platine und/oder an und/oder in einem Gehäuse des Batteriemanagementsystems angeordnet ist. Hierdurch wird eine sehr kostengünstige, komfortable und stabile Bauweise des Batteriemanagementsystems erzielt.

Als weiterer Vorteil kann vorgesehen sein, dass eine Aktivierungsvorrichtung zur zumindest impulsartigen Initiierung der Energieversorgung des Batteriemanagementsystems vorgesehen ist, wobei vorzugsweise die Energieversorgung automatisiert oder ausschließlich manuell durch eine insbesondere manuelle Aktivierung der Aktivierungsvorrichtung herstellbar ist. Die Aktivierungsvorrichtung weist hierzu bspw. einen manuell betätigbaren Schalter auf, welcher aktiv und bewusst durch einen Benutzer aktiviert werden kann bzw. muss, um so manuell die Energieversorgung des Batteriemanagementsystems herzustellen. Vorzugsweise weist die Erhaltungsvorrichtung die Aktivierungsvorrichtung auf, wobei die Aktivierungsvorrichtung bspw. schaltungstechnisch in der Erhaltungsvorrichtung integriert ist. Dabei ist die Aktivierungsvorrichtung insbesondere als eine Stromstoßschaltung ausgebildet. Die Aktivierungsvorrichtung liefert insbesondere eine zumindest impulsartige Energieversorgung für das Batteriemanagementsystem. Diese Energieversorgung der Aktivierungsvorrichtung ist dabei vorzugsweise ausreichend für das Starten des Batteriemanagementsystems. Bevorzugt muss sich dieses allerdings anschließend selbst aktiv halten. Ein automatisches Starten bzw. eine automatische Aktivierung der Energieversorgung durch das Batteriemanagementsystem selbst ist dann vorzugsweise nicht vorgesehen und somit verhindert. Besonders bevorzugt ist ferner eine dauerhafte Energieversorgung durch die Aktivierungsvorrichtung zu verhindern, um so ein automatisches Deaktivieren des Batteriemanagementsystems durch eine Unterbrechung der Energieversorgung durch das Batteriemanagementsystem selbst zu ermöglichen. Hierdurch ist ein besonders sicherer Betrieb und/oder des Batteriesystems möglich. Ebenfalls ist es denkbar, dass die Energieversorgung automatisiert herstellbar ist. Dabei kann die Aktivierung der Aktivierungsvorrichtung bspw. in Abhängigkeit von externen Geräten und/oder Komponenten und/oder Ereignissen erfolgen. So wird bspw. bei einer Inbetriebnahme eines externen Gerätes die Energieversorgung automatisch initiiert.

Ein weiterer Vorteil kann im Rahmen der Erfindung erzielt werden, wenn die Aktivierungsvorrichtung eine Zeitschaltung, insbesondere mit einem elektrischen Schaltelement (Schalteinheit) aufweist, um nach einer vorbestimmten Zeit die impulsartige Initiierung der Energieversorgung zu unterbrechen. Dabei ist vorzugsweise die impulsartige Initiierung der Energieversorgung eine Initiierungsphase und/oder erfolgt innerhalb einer Initiierungsphase, in welcher die Energieversorgung des Batteriemanagementsystems stets und/oder ausschließlich durch die Aktivierungsvorrichtung hergestellt und/oder erhalten ist. Nach einer Beendigung der Initiierung bzw. Initiierungsphase ist allerdings insbesondere die Energieversorgung unterbrochen, falls sie bis dahin nicht durch das Batteriemanagementsystem aktiv aufrechterhalten wird. Die Aufrechterhaltung (Erhaltung) der Energieversorgung erfolgt dabei über das Steuerungsmittel an der Erhaltungsvorrichtung. Die Dauer der Initiierungsphase ist bevorzugt abhängig von der Zeitschaltung und erfolgt besonders bevorzugt für die vorbestimmte Zeit. Die Zeitschaltung ist vorzugsweise eine elektronische Schaltung und/oder weist zumindest einen Halbleiterschalter und/oder einen elektronischen Timerbaustein (Zeitgeber) auf. Dabei beträgt die vorbestimmte Zeit bspw. maximal 1 µs und/oder 10 µs und/oder 100 µs und/oder 1 s und/oder 10 s.

Ein weiterer Vorteil kann im Rahmen der Erfindung erzielt werden, wenn das Batteriemanagementsystem über das Steuerungsmittel derart elektrisch mit der Aktivierungsvorrichtung und/oder der Erhaltungsvorrichtung verbunden ist, dass nur während der impulsartigen Initiierung der Energieversorgung durch die Aktivierungsvorrichtung das Batteriemanagementsystem die Erhaltung der Energieversorgung aktivieren kann. Die Aktivierung der Erhaltung der Energieversorgung bezieht sich in diesem Zusammenhang darauf, dass die Energieversorgung des Batteriemanagementsystems bei einer Aktivierung durch das Batteriemanagementsystem während der Initiierungsphase auch nach der Initiierungsphase erhalten bleibt. Sie kann dann bspw. so lange erhalten bleiben, bis sie vorzugsweise manuell unterbrochen und/oder durch das Batteriemanagementsystem (automatisch) unterbrochen wird. Dagegen ist bspw. eine Erhaltung der Energieversorgung nach der Initiierungsphase verhindert, wenn sie nicht während der Initiierungsphase durch das Batteriemanagementsystem aktiviert wurde. Dies hat den Vorteil, dass eine impulsartige Energieversorgung (Stromstoß) genügt, um das Batteriemanagementsystem zu starten, welches sich anschließend jedoch jederzeit selbst deaktivieren kann.

Ein weiterer Vorteil kann im Rahmen der Erfindung erzielt werden, wenn eine Versorgungseinheit, insbesondere ein Gleichspannungswandler vorgesehen ist, die elektrisch mit dem Batteriemanagementsystem zur Energieversorgung verbunden ist, wobei die Erhaltungsvorrichtung elektrisch mit der Versorgungseinheit verbunden ist, um eine Energieversorgung zu bewirken. Die Versorgungseinheit dient damit zur elektrischen Energieversorgung des Batteriemanagementsystems, wobei bei einer Unterbrechung der Energieversorgung durch das Batteriemanagementsystem entsprechend auch die Ansteuerung und/oder die Versorgung der Versorgungseinheit verändert und oder unterbrochen wird. Somit kann zuverlässig die Energieversorgung des Batteriemanagementsystems unterbrochen werden. Dabei ist es denkbar, dass (z. B. ausschließlich) das Batteriemanagementsystem über das Steuerungsmittel mit der Erhaltungsvorrichtung verbunden ist, wobei die Versorgungseinheit (direkt) elektrisch mit der Erhaltungsvorrichtung verbunden ist. Auch kann es möglich sein, dass außerhalb der Initiierungsphase bei deaktivierter Energieversorgung dennoch der Eingang der Versorgungseinheit mit Energie versorgt wird, wobei z. B. die Energieversorgung des Batteriemanagementsystems durch eine entsprechende Ansteuerung der Versorgungseinheit (z. B. durch entsprechende elektrische Signale) verhindert ist.

Ebenfalls Gegenstand der Erfindung ist ein Batteriemanagementsystem für ein Batteriesystem, insbesondere für ein wiederaufladbares Lithium-Ionen-Batteriesystems und/oder wiederaufladbares Lithium-Batteriesystems, mit einer Energieversorgungsvorrichtung. Hierbei ist vorgesehen, dass die Energieversorgungsvorrichtung eine Erhaltungsvorrichtung zur Erhaltung der Energieversorgung für das Batteriemanagementsystem umfasst, wobei die Erhaltungsvorrichtung ein Steuerungsmittel zur Ansteuerung aufweist, und die Erhaltungsvorrichtung über das Steuerungsmittel derart ansteuerbar ist (und insbesondere mit dem Batteriemanagementsystem, d. h. mit zumindest einer Komponente des Batteriemanagementsystems verbindbar und/oder verbunden ist), dass eine Erhaltung und Unterbrechung der Energieversorgung durch das Batteriemanagementsystem aktiv durchführbar ist. Die Energieversorgung kann insbesondere durch das Batteriemanagementsystem, d. h. durch wenigstens eine (elektronische) Komponente des Batteriemanagementsystems (ggf. auch durch die Energieversorgungsvorrichtung selbst und/oder ausschließlich von weiteren von der Energieversorgungsvorrichtung unabhängigen Komponenten) aktiv gesteuert, d. h. erhalten und unterbrochen werden. Die Komponente ist bspw. eine Elektronikeinheit zur Ausgabe eines Signals und/oder einer Spannung. Zudem kann das erfindungsgemäße Batteriemanagementsystem eine erfindungsgemäße Energieversorgungsvorrichtung aufweisen. Damit bringt das erfindungsgemäße Batteriemanagementsystem die gleichen Vorteile mit sich, wie sie ausführlich mit Bezug auf eine erfindungsgemäße Energieversorgungsvorrichtung beschrieben worden sind.

Ebenfalls unter Schutz gestellt sind ferner ein Batteriesystem und ein System mit der erfindungsgemäßen Energieversorgungsvorrichtung, insbesondere mit der Erhaltungsvorrichtung und/oder der Aktivierungsvorrichtung, und dem erfindungsgemäßen Batteriemanagementsystem.

Weiter ist im Rahmen der Erfindung denkbar, dass die Energieversorgungsvorrichtung und/oder die Erhaltungsvorrichtung und/oder eine Aktivierungsvorrichtung und/oder eine Versorgungseinheit auf einer Platine des Batteriemanagementsystems angeordnet und/oder elektrisch miteinander verbunden sind. Entsprechend kann es möglich sein, dass die erfindungsgemäße Energieversorgungsvorrichtung Bestandteil des Batteriemanagementsystems ist. Die Energieversorgung des Batteriemanagementsystems betrifft in diesem Zusammenhang bspw. lediglich die Kernfunktionen (z. B. Überwachung) des Batteriemanagementsystems oder alternativ auch die Energieversorgungsvorrichtung und/oder die Versorgungseinheit. Weiter kann es vorgesehen sein, dass die Elektronikkomponenten des Batteriemanagementsystems (d. h. die Energieversorgungsvorrichtung und/oder die Erhaltungsvorrichtung und/oder die Aktivierungsvorrichtung und/oder die Versorgungseinheit) zumindest teilweise als integrierte Schaltungen und/oder als aktive elektrische Bauelemente ausgebildet sind und/oder aktive elektrische Bauelemente aufweisen. Hierdurch wird ein besonders kostengünstiger und platzsparender Aufbau gewährleistet.

Ebenfalls Gegenstand der Erfindung ist ein Verfahren zum Betreiben eines Batteriemanagementsystems für ein Batteriesystem, insbesondere für ein wiederaufladbares Lithium-Ionen-Batteriesystems und/oder Lithium-Batteriesystems, insbesondere mit einer Energieversorgungsvorrichtung. Hierbei ist vorgesehen, dass das Batteriemanagementsystem eine Erhaltung und Unterbrechung der Energieversorgung des Batteriemanagementsystems aktiv durchführt. Damit bringt das erfindungsgemäße Verfahren die gleichen Vorteile mit sich, wie sie ausführlich mit Bezug auf eine erfindungsgemäße Energieversorgungsvorrichtung und/oder ein erfindungsgemäßes Batteriemanagementsystem erläutert worden sind. Zudem kann das Verfahren geeignet sein, eine erfindungsgemäße Energieversorgungsvorrichtung und/oder ein erfindungsgemäßes Batteriemanagementsystem zu betreiben.

Vorteilhaft ist es darüber hinaus, wenn im Rahmen der Erfindung das Batteriemanagementsystem Abschaltbedingungen ermittelt, insbesondere durch Messungen am Batteriesystem, insbesondere zur Ermittlung einer Tiefenentladung des Batteriesystems, wobei in Abhängigkeit von den Abschaltbedingungen entweder eine Erhaltung oder eine automatische Unterbrechung der Energieversorgung des Batteriemanagementsystems erfolgt. Die Messungen können dabei z. B. durch eine Messvorrichtung erfolgen, wobei die Messvorrichtung zumindest eine Messeinheit aufweist. Die Messeinheiten sind bspw. als Sensoren ausgebildet und bspw. am Energiespeicher des Batteriesystems und/oder an und/oder in den Energiespeicherzellen angeordnet. Die Abschaltbedingungen umfassen bspw. zumindest einen oberen Grenzwert und/oder zumindest einen unteren Grenzwert. Dabei können die Abschaltbedingungen insbesondere vordefiniert und/oder in einem nicht-flüchtigen Datenspeicher des Batteriemanagementsystems gespeichert sein. Die Messvorrichtung erfasst dabei durch die Messung z. B. Parameter des Batteriesystems, wobei die erfassten Messwerte (der Parameter) z. B. in dem Datenspeicher zwischengespeichert werden und/oder von einer Auswerte-Steuerungseinheit ausgewertet werden. Die Auswerte-Steuerungseinheit ist bspw. als Mikrocontroller und/oder als digitaler Prozessor ausgebildet. Die Auswerte-Steuerungseinheit vergleicht ferner z. B. die gespeicherten Abschaltbedingungen mit den Messwerten und stellt hierdurch fest, ob eine Abschaltbedingung und/oder ein kritischer Zustand des Batteriesystems vorliegen. In Abhängigkeit von diesem Ergebnis wird dann z. B. beim Vorliegen eines kritischen Zustands die Energieversorgung des Batteriesystems und/oder des Batteriemanagementsystems unterbrochen. Dies kann bspw. dadurch geschehen, dass eine Elektronikkomponente des Batteriemanagementsystems die Ausgabe eines Signals zur Unterbrechung an die Erhaltungsvorrichtung über das Steuerungsmittel initiiert und/oder ein Signal zur Erhaltung der Energieversorgung unterbricht. Die Elektronikkomponente ist bspw. die Auswerte-Steuerungseinheit und/oder die Messvorrichtung. Somit kann ein zuverlässiger Betrieb des Batteriesystems gewährleistet sowie eine Beschädigung des Batteriesystems vermieden werden.

Vorteilhaft ist es darüber hinaus, wenn im Rahmen der Erfindung eine impulsartige Initiierung der Energieversorgung durch eine Aktivierungsvorrichtung manuell aktiviert wird und insbesondere derart erfolgt, dass während einer Initiierungsphase die Energieversorgung des Batteriemanagementsystems hergestellt ist. Die impulsartige Initiierung der Energieversorgung wird dabei dadurch manuell aktiviert, dass die Aktivierungsvorrichtung z. B. manuell von einem Benutzer bspw. durch Betätigung einer Schalteinheit aktiviert wird. Ebenfalls ist zur manuellen Aktivierung eine Ansteuerung der Aktivierungsvorrichtung von einem externen Gerät denkbar, welches die Aktivierung im Zuge weiterer Ereignisse durchführt z. B. beim (manuellen) Anlassen eines Motors. Somit ist es auch denkbar, dass die Aktivierungsvorrichtung einen extern ansteuerbaren elektronischen Schalter (z. B. Halbleiterschalter) aufweist. Die Initiierungsphase ist dabei in Bezug auf ihre Dauer und/oder Strom- und/oder Spannungsstärke der Energieversorgung insbesondere von der Aktivierungsvorrichtung abhängig (d. h. z. B. von der konkreten Ausbildung und/oder Parametrisierung). Die Initiierungsphase wird dabei vorzugsweise dem Batteriemanagementsystem derart angepasst, dass dieses (z. B. ausschließlich) bei der Durchführung der Initiierungsphase startet und somit die Energieversorgung selbst aufrechterhalten kann.

Vorteilhaft ist es darüber hinaus, wenn im Rahmen der Erfindung nach der Initiierungsphase die Energieversorgung nur dann erhalten wird, wenn die Erhaltung der Energieversorgung durch das Batteriemanagementsystem aktiv während der Initiierungsphase erfolgt ist. Bevorzugt erfolgt dabei die Erhaltung im Gegensatz zur manuellen Aktivierung der Aktivierungsvorrichtung bzw. manuellen Herstellung der Energieversorgung aktiv (d. h. insbesondere automatisch) durch das Batteriemanagementsystem. Somit erfolgt die Erhaltung insbesondere ausschließlich ohne manuelle Einwirkung, d. h. automatisch bzw. aktiv durch das Batteriemanagementsystem. Mit anderen Worten ist zur Erhaltung der Energieversorgung des Batteriemanagementsystems (über die Initiierungsphase hinaus) zunächst eine manuelle Herstellung der Energieversorgung durch Aktivierung der Initiierungsphase und anschließend während der Initiierungsphase eine aktive Erhaltung durch das Batteriemanagementsystem selbst notwendig. Dabei ist neben der Erhaltung auch die Unterbrechung der Energieversorgung durch das Batteriemanagementsystem aktiv durchführbar. Für die aktive Ansteuerung weist das Batteriemanagementsystem insbesondere Elektronikkomponenten (elektronische Komponenten, wie z. B. Halbleiterbauelemente) auf, bspw. eine Auswerte-Steuerungseinheit, welche nach der Aktivierung bzw. Herstellung der Energieversorgung während der Initiierungsphase und/oder dem Starten des Batteriemanagementsystems insbesondere sofort aktiv eine Erhaltung der Energieversorgung vornehmen. Hierzu initiiert die Elektronikkomponente bspw. eine Ausgabe eines entsprechenden Signals über das Steuerungsmittel an die Erhaltungsvorrichtung, welches eine Erhaltung der Energieversorgung auch nach der Initiierungsphase bewirkt. Somit ist eine zuverlässige Erhaltung durch das Batteriemanagementsystem möglich.

Vorteilhaft ist es darüber hinaus, wenn im Rahmen der Erfindung nach der Initiierungsphase die Energieversorgung solange erhalten wird, bis die Energieversorgung entweder manuell oder aktiv durch das Batteriemanagementsystem unterbrochen wird. Die manuelle Unterbrechung erfolgt bspw. durch einen Eingriff von einem Benutzer von außen. Die aktive Unterbrechung erfolgt insbesondere automatisch, z. B. bei einem Vorliegen von Abschaltbedingungen und/oder bei einer Detektion eines kritischen Zustands durch das Batteriemanagementsystem. Dies hat den Vorteil, dass stets ein sicherer Betrieb des Batteriesystems gewährleistet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Batteriesystems,
- Fig. 2: eine weitere schematische Darstellung des Batteriesystems,
- Fig. 3: eine perspektivische Draufsicht auf ein erfindungsgemäßes Batteriemanagementsystem,
- Fig. 4: eine schematische Darstellung einer erfindungsgemäßen Energieversorgungsvorrichtung,
- Fig. 5: eine schematische Darstellung eines Batteriesystems, einer erfindungsgemäßen Energieversorgungsvorrichtung und eines erfindungsgemäßen Batteriemanagementsystems,
- Fig. 6: eine schematische Darstellung zur Visualisierung eines erfindungsgemäßen Verfahrens.

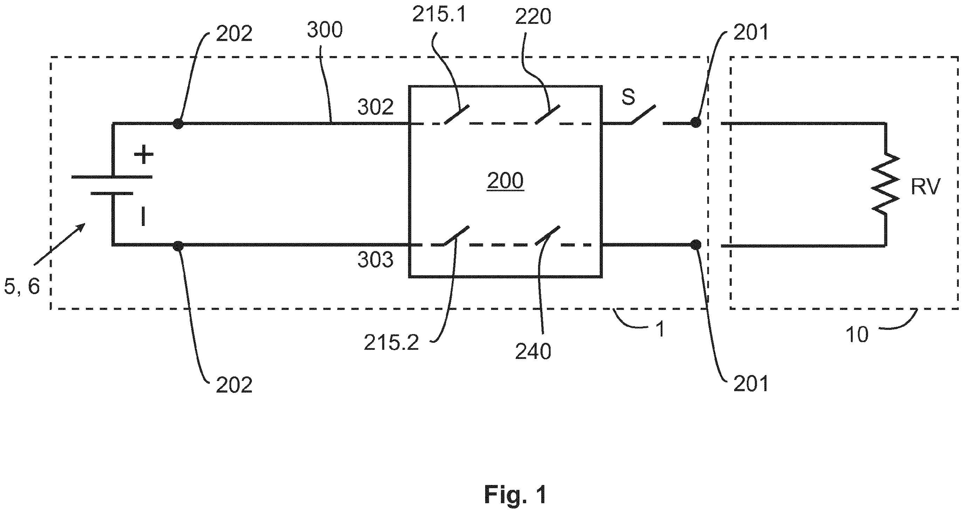

Figur 1 zeigt ein schematisches Schaltbild eines erfindungsgemäßen Batteriesystems 1, wobei ein Energiespeicher 5 sowie ein erfindungsgemäßes Batteriemanagementsystem 200 des Batteriesystems 1 dargestellt sind. Der Energiespeicher 5 kann dabei insbesondere als Lithium-Ionen-Batterie ausgebildet sein und weist vorzugsweise mehrere Energiespeicherzellen 6 (Batteriezellen) auf, welche z. B. parallel geschaltet zumindest ein Zellpaket 6 ergeben. Weiter ist auch eine aktive Komponente 10 dargestellt, welche z. B. als Last für das Batteriesystem 1 dient und/oder als Wechselrichter 10 ausgebildet sein kann. Die Komponente 10 dient ferner zur Verbindung des Batteriesystems 1 mit Verbrauchern, dargestellt durch einen Verbraucherwiderstand RV. Dabei kann die Komponente 10 in einem Stromkreis 300 mit dem Batteriesystem 1 derart verbunden werden, dass ein Stromfluss (elektrischer Ladungstransport) möglich ist und ein Batteriestrom bzw. Lade- und/oder Entladestrom fließt. Hierzu ist es z. B. notwendig, dass Anschlüsse der Komponente 10 mit elektrischen Verbindungskontakten 201 des Batteriesystems 1 verbunden werden. Weiter kann zur Inbetriebnahme des Batteriesystems 1 an der Komponente 10 vorausgesetzt werden, dass zumindest ein Hauptschalter S des Batteriesystems 1 z. B. automatisiert und/oder manuell geschlossen wird. Auf den Hauptschalter S kann alternativ auch gänzlich verzichtet werden oder die Funktion des Hauptschalters S kann z. B. durch das Batteriemanagementsystem 200 übernommen werden. Der Hauptschalter S in der dargestellten Schaltung repräsentiert vorzugsweise einen oder mehrere manuell betätigbare elektrische Schalteinheiten, welche z. B. durch einen Benutzer des Batteriesystems 1 bedient werden. Auch kann es vorgesehen sein, dass neben dem Hauptschalter S noch ein Vorladeschalter vorgesehen ist, welcher vor der Inbetriebnahme durch den Hauptschalter S betätigt wird, um eine Vorladung einer Kapazität der Komponente 10 zu bewirken.

Es ist in Figur 1 ferner erkennbar, dass das Batteriesystem 1 aus Sicherheitsgründen ein erfindungsgemäßes Batteriemanagementsystem 200 aufweist, welches im Stromkreis 300 des Batteriesystems 1 (bzw. des Energiespeichers 5) integriert ist. Das Batteriemanagementsystem 200 umfasst mehrere schematisch dargestellte Schalteinheiten 215.1, 215.2, 220, 240, welche derart im Batteriesystem 1 angeordnet und/oder integriert sind, dass eine Unterbrechung des Stromkreises 300 und/oder eine Unterbindung eines Stromflusses im Stromkreis 300 zumindest in eine Richtung durchführbar ist. Bevorzugt ist dabei eine erste Halbleiterschalteinheit 215.1 im Pluszweig 302 (d. h. im positiven Strompfad 302 des Stromkreises 300) und eine zweite Halbleiterschalteinheit 215.2 im Minuszweig 303 (d. h. im negativen Strompfad 303 des Stromkreises 300) vorgesehen. Die Halbleiterschalteinheiten 215 sind dabei als elektronischer Schalter, bevorzugt als Feldeffekttransistoren, und besonders bevorzugt als MOSFETs ausgebildet, um bei einer Aktivierung bzw. einem Schalten den Stromfluss zumindest in eine Richtung zu unterbinden. Als redundante Schalteinheiten sind ferner eine Sicherheitsschalteinheit 220, insbesondere im Pluszweig 302, und/oder eine Überstromschutzeinrichtung 240, insbesondere im Minuszweig 303 vorgesehen. Anders als die Halbleiterschalteinheiten 215 dienen dabei die redundanten Schalteinheiten zur redundanten, irreversiblen und/oder vollständigen Trennung des Stromkreises 300, insbesondere durch eine vollständige galvanische Trennung. Auch ist es denkbar, dass das Batteriemanagementsystem 200 noch weitere Schalteinheiten aufweist, um z. B. die Sicherheit noch weiter zu erhöhen. Weiter sind noch zwei Kontakte 202 dargestellt, welche eine elektrische Verbindung des Batteriemanagementsystems 200 zu dem zumindest einen Energiespeicher 5 ermöglichen. Die in den Figuren gezeigten Schaltbilder sind dabei rein schematisch, so dass selbstverständlich auch eine veränderte Anordnung der Bauelemente denkbar ist.

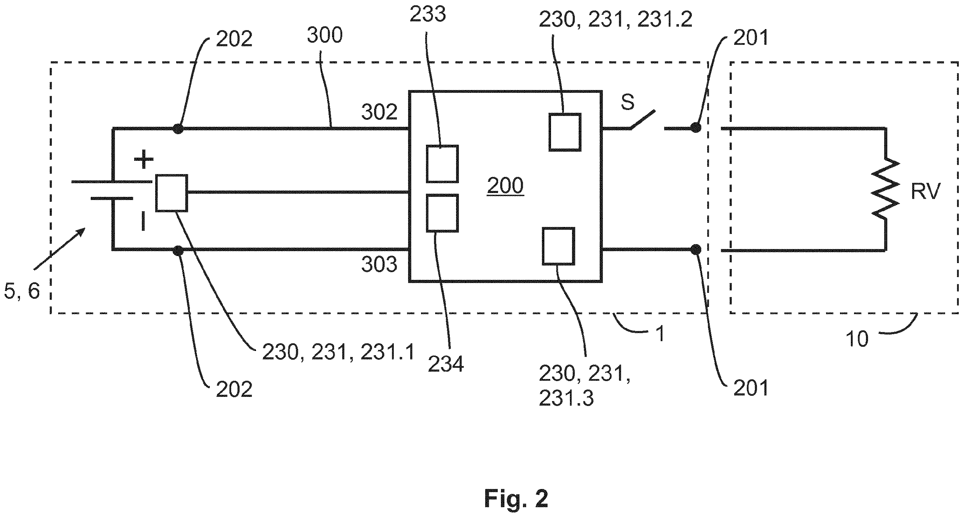

Figur 2 zeigt eine weitere schematische Darstellung des erfindungsgemäßen Batteriesystems 1, wobei weitere Komponenten des erfindungsgemäßen Batteriemanagementsystems 200 schematisch gezeigt sind. Neben den in Figur 2 nicht dargestellten Schalteinheiten 215.1, 215.2, 220, 240 umfasst das erfindungsgemäße Batteriemanagementsystem 200 zumindest eine Überwachungsvorrichtung 230, wobei beispielhaft die Anordnung von Überwachungseinheiten 231 am Batteriesystem 1 dargestellt ist. Die Überwachungseinheiten 231 und die Überwachungsvorrichtung 230 dienen zur Ermittlung von Parametern des Energiespeichers 5. Eine erste Überwachungseinheit 231.1 ist dabei im Bereich und/oder innerhalb des Energiespeichers 5 bzw. bei und/oder innerhalb der Energiespeicherzellen 6 angeordnet, um die Batterie und/oder die Zellen zu überwachen und so die Parameter des Energiespeichers 5 zu ermitteln (z. B. Temperatur und/oder Kapazität und/oder Spannung und/oder Strom oder dergleichen). Eine weitere zweite Überwachungseinheit 231.2 und eine dritte Überwachungseinheit 231.3 sind im Batteriemanagementsystem 200 integriert und dienen z. B. zur Überwachung des Stromkreises 300 (z. B. Strom und/oder Spannung) und/oder zur Überwachung der Temperatur oder dergleichen. Die Überwachungseinheiten 231 können dabei z. B. als Sensoren ausgebildet sein, und elektrisch z. B. mit einer zentralen Überwachungsvorrichtung 230 und/oder mit einer Auswerte-Steuerungseinheit 233 derart verbunden zu sein, dass die durch die Sensoren erfassten Messwerte und/oder elektrischen Signale von der Überwachungsvorrichtung 230 und/oder von der Auswerte-Steuerungseinheit 233 erfasst und/oder ausgewertet werden können, um so die Parameter zu ermitteln. Zusätzlich oder alternativ können die Überwachungseinheiten 231 auch autonom und/oder autark voneinander ausgebildet sein und genutzt werden. So kann bspw. vorgesehen sein, dass die Überwachungsvorrichtung 230 ein Überwachungssystem bildet, welches mehrere Überwachungseinheiten 231 umfasst. Die Überwachungseinheiten 231 können jeweils z. B. mit einer zentralen Auswerte-Steuerungseinheit 233 und/oder mit mehreren unabhängigen Auswerte-Steuerungseinheiten 233 verbunden sein. Die Auswerte-Steuerungseinheit 233 kann dabei die elektrischen Signale und/oder Messwerte von den Überwachungseinheiten 231 empfangen, auswerten, ggf. (zwischen-)speichern und so die Parameter ermitteln. Dabei ist die Auswerte-Steuerungseinheit 233 z. B. mit einem nicht-flüchtigen Datenspeicher 234 elektrisch / elektronisch verbunden.

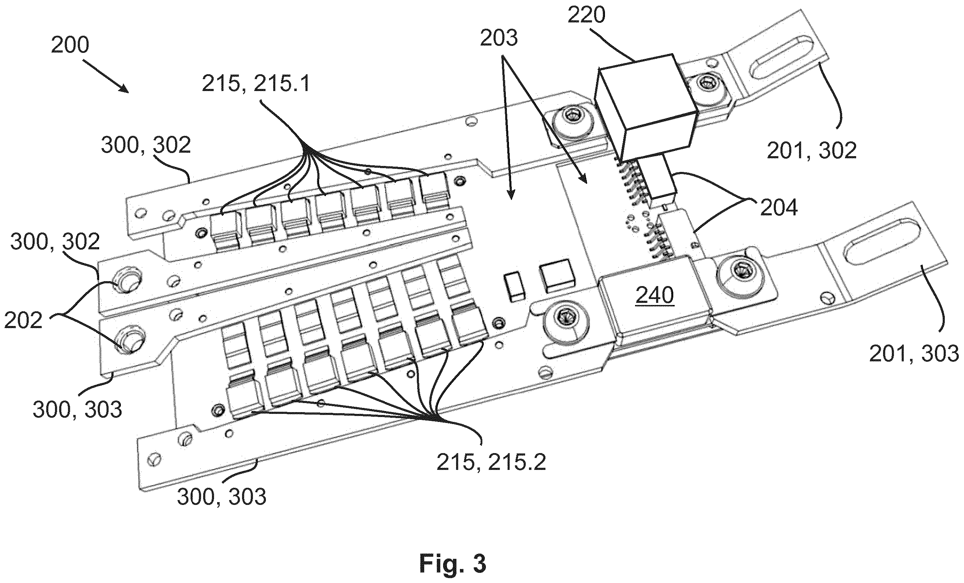

Figur 3 zeigt eine Draufsicht auf ein erfindungsgemäßes Batteriemanagementsystem 200, wobei insbesondere die Elektronik (d. h. die elektrischen Komponenten) des Batteriemanagementsystem 200 gezeigt werden. Die Elektronik ist dabei auf einer Platine 203 des Batteriemanagementsystems 200 angeordnet, wobei die Platine 203 z. B. von einem nicht dargestellten äußeren Gehäuse umgeben ist. Weiter sind Leitungsbahnen bzw. Stromschienen des Stromkreises 300 dargestellt, welcher das Batteriesystem 1 bzw. den Energiespeicher 5 mit der Komponente 10 verbindet. So ist ein positiver Strompfad 302 und ein negativer Strompfad 303 dargestellt, wobei die elektrischen Leitungen den Stromfluss des Batteriestroms und/oder des Lade- und/oder Entladestroms des Energiespeichers 5 ermöglichen. Um das Batteriesystem 1 mit dem Batteriemanagementsystem 200 zu verbinden, sind an den Leitungen Kontakte 202 vorgesehen, welche z. B. mittels einer Schraub- und/oder Steck- und/oder Clipsverbindung eine elektrische Verbindung bzw. Kontaktierung zum Energiespeicher 5 (bzw. der elektrischen Anschlüsse des Energiespeichers 5) ermöglichen. Der Stromfluss im Stromkreis 300 erfolgt dabei vom Energiespeicher 5 über die Kontakte 202 zunächst zu den Halbleiterschalteinheiten 215 und dann über die Halbleiterschalteinheiten 215 zu den redundanten Schalteinheiten 220, 240 und anschließend zu den Verbindungskontakten 201, welche elektrisch z. B. über Endableitungen mit der Komponente 10 verbunden werden. Auch ist es selbstverständlich möglich, dass der Stromfluss in Abhängigkeit von der Stromrichtung (z. B. bei einem Ladestrom) genau umgekehrt erfolgt. Entscheidend ist hierbei, dass die Halbleiterschalteinheiten 215 und/oder die redundanten Schalteinheiten 220, 240 den Stromfluss zumindest teilweise unterbinden können. Auch sind Schnittstellen 204 gezeigt, welche z. B. als Steckverbindungen ausgebildet sein können und eine Kommunikation mit externen Geräten ermöglichen. Hierzu sind die Schnittstellen 204 elektrisch mit der Elektronik des Batteriemanagementsystems 200 verbunden. Die Elektronik weist dabei bspw. zumindest eine elektrische Komponente, wie eine nicht explizit dargestellte Auswerte-Steuerungseinheit 233 und/oder (nicht-flüchtigen) Datenspeicher 234 und/oder Überwachungsvorrichtung 230 bzw. Überwachungseinheit 231 auf. Die elektrischen Komponenten können bspw. als integrierte Schaltkreise, Mikrocontroller und/oder Logik- bzw. Elektronikbausteine ausgebildet sein.

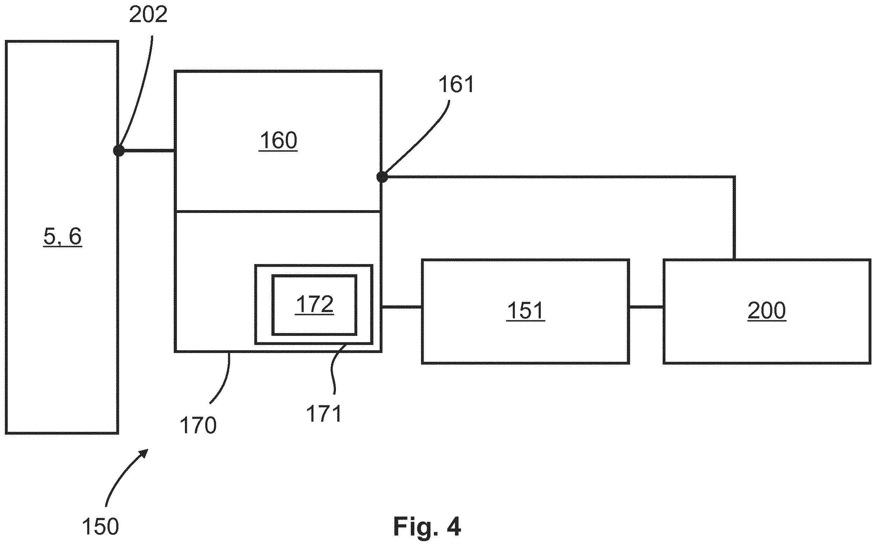

In Figur 4 ist schematisch eine erfindungsgemäße Energieversorgungsvorrichtung 150 gezeigt, welche mit einem Energiespeicher 5 elektrisch verbunden ist. Der Energiespeicher 5 weist dabei zumindest eine Energiespeicherzelle 6 auf. Ein Batteriemanagementsystem 200 ist dabei über die Energieversorgungsvorrichtung 150 mit dem Energiespeicher 5 verbunden, wobei das Batteriemanagementsystem 200 die Energieversorgungsvorrichtung 150 aufweist oder alternativ separat davon ausgebildet ist. So kann das Batteriemanagementsystem 200 z. B. eine bauliche Einheit mit der Energieversorgungsvorrichtung 150 bilden. Die Energieversorgungsvorrichtung 150 ist ferner derart im Batteriemanagementsystem 200 integriert und/oder elektrisch mit dem Batteriemanagementsystem 200 verbunden, dass es eine Energieversorgung zu dem Batteriemanagementsystem 200 steuern, d. h. initiieren und/oder unterbrechen und/oder erhalten kann. Die Steuerung der Energieversorgung erfolgt dabei durch eine aktive Ansteuerung der Energieversorgungsvorrichtung 150 bzw. einer Erhaltungsvorrichtung 160 durch das Batteriemanagementsystem 200. Zur Ansteuerung gibt das Batteriemanagementsystem 200 bspw. zumindest ein Signal über ein Steuerungsmittel 161 aus, mit welchem es elektrisch verbunden ist. Das Steuerungsmittel 161 ist dabei bspw. als Eingang und/oder Leitung und/oder Potential der Erhaltungsvorrichtung 160 ausgebildet. So kann vorgesehen sein, dass bei einem Vorliegen eines Signals am Steuerungsmittel 161 die Energieversorgung durch die Erhaltungsvorrichtung 160 erhalten bleibt, wobei bei einem Ausbleiben des Signals am Steuerungsmittel 161 die Energieversorgung durch die Erhaltungsvorrichtung 160 unterbrochen wird. Hierdurch kann die Energieversorgung durch das Batteriemanagementsystem 200 selbst aktiv gesteuert werden. Um eine zuverlässige Energieversorgung des Batteriemanagementsystems 200 zu bewirken, ist eine Versorgungseinheit (als Bestandteil des Batteriemanagementsystems 200 und/oder als separates Bauteil) vorgesehen. Die Erhaltungsvorrichtung 160 ist dabei elektrisch mit der Versorgungseinheit 151 verbunden.

Damit eine Energieversorgung erstmalig bzw. nach einer Unterbrechung der Energieversorgung des Batteriemanagementsystems 200 hergestellt werden kann, muss eine (manuelle) Initiierung der Energieversorgung erfolgen. Dies geschieht mittels einer Aktivierungsvorrichtung 170, welche z. B. eine Zeitschaltung 171 aufweist. Die Zeitschaltung 171 umfasst dabei insbesondere ein Schaltelement 172, insbesondere eine Halbleiterschalteinheit, wie ein MOSFET und/oder Leistungs-MOSFET. Das Schaltelement 172 dient dabei vorzugsweise gleichzeitig zur Unterbrechung der Energieversorgung zum Batteriemanagementsystem 200.

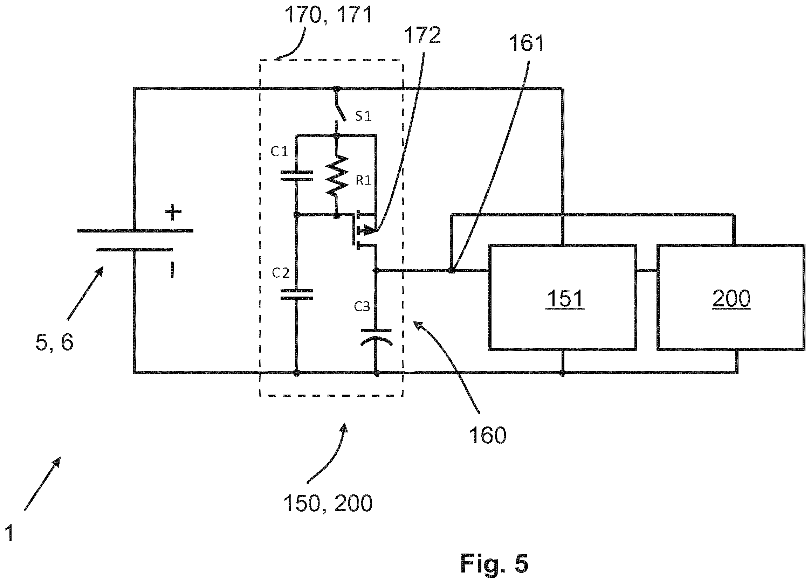

In Figur 5 ist eine weitere schematische Darstellung der erfindungsgemäßen Energieversorgungsvorrichtung 150 sowie des erfindungsgemäßen Batteriemanagementsystems 200 gemäß einem weiteren Ausführungsbeispiel gezeigt. Die hier gezeigte schematische Schaltung bzw. Schaltanordnung der Energieversorgungsvorrichtung 150 kann dabei bspw. Bestandteil des Batteriemanagementsystems 200 sein. Die Energieversorgungsvorrichtung 150 weist dabei eine Aktivierungsvorrichtung 170 mit einer integrierten Zeitschaltung 171 auf. Wichtiger Bestandteil der Zeitschaltung 171 ist das Schaltelement 172 und/oder ein Kondensator C3. Das Schaltelement 172 ist hierbei als Halbleiterschalter, insbesondere als Feldeffekttransistor bzw. MOSFET ausgebildet. Weiter sind eine Schalteinheit S1 und zumindest zwei weitere Kondensatoren C1 und C2 sowie ein Widerstand R1 vorgesehen. Über die Schalteinheit S1 kann hierbei die Energieversorgung des Batteriemanagementsystems 200 z. B. manuell aktiviert und/oder unterbrochen und/oder die Aktivierungsvorrichtung 170 manuell aktiviert werden. Durch die Aktivierung der Aktivierungsvorrichtung 170 wird manuell die Energieversorgung für eine bestimmte Dauer (Initiierungsphase) hergestellt. Über den Spannungsteiler aus C1 und C2 entsteht im Schaltvorgang kurz eine Spannung über einen Anschluss (z. B. ein Gate) des Schaltelements 172. Diese Spannung wird genutzt, um das Schaltelement 172 zu schalten. Hierdurch wird während der Initiierungsphase eine Energieversorgung des Batteriemanagementsystems 200 hergestellt. Während dieser Initiierungsphase muss das Batteriemanagementsystem 200 ein (Aktiv- bzw. Enable-) Signal über das Steuerungsmittel 161 an die Erhaltungsvorrichtung 160 ausgeben. Dies kann bspw. dadurch geschehen, dass das Batteriemanagementsystem 200 die elektrische Leitung, mit welcher es mit dem Steuerungsmittel 161 verbunden ist, aktiv mit dem Aktiv-Signal versorgt. Innerhalb einer vorbestimmten Zeitdauer der Initiierungsphase entlädt sich der Kondensator C3, sodass das Batteriemanagementsystem 200 deaktiviert wird. Dies entspricht der Funktionalität der Zeitschaltung 171. Dabei ist die Zeitdauer der Initiierungsphase derart gewählt, dass sie für einen Start des Batteriemanagementsystems 200 zur Aktivierung und Erhaltung der Energieversorgung ausreicht. Durch ein Ausbleiben und/oder durch einen Wegfall des Aktiv-Signals kann das Batteriemanagementsystem 200, d. h. bspw. wenigstens eine weitere (nicht-dargestellte) elektronische Komponente des Batteriemanagementsystems 200, die Energieversorgung anschließend jederzeit wieder unterbrechen. Die (nicht-dargestellte) elektronische Komponente ist dabei z. B. eine Elektronikeinheit zur Ausgabe eines Signals und/oder einer Spannung.

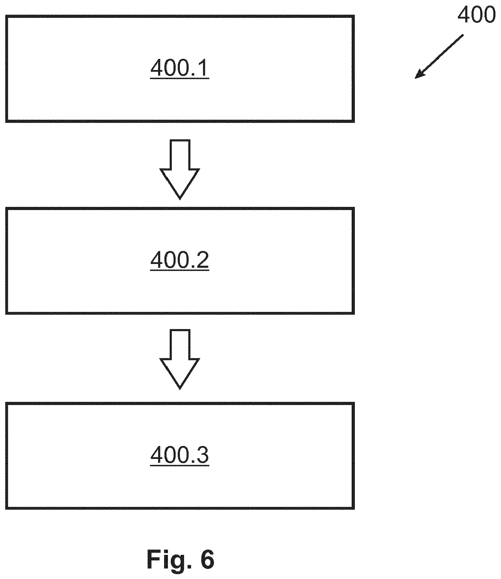

In Figur 6 sind schematisch Verfahrensschritte eines erfindungsgemäßen Verfahrens 400 gezeigt. Gemäß einem ersten Verfahrensschritt 400.1 erfolgt dabei die manuelle Aktivierung einer Aktivierungsvorrichtung 170 z. B. durch Betätigung einer Schalteinheit S1 durch einen Benutzer. Gemäß einem zweiten Verfahrensschritt 400.2 wird hierdurch die Initiierungsphase gestartet, während das Batteriemanagementsystem 200 aktiv die Energieversorgung erhalten kann. Im dritten Verfahrensschritt 400.3 wird nach der Initiierungsphase die Energieversorgung durch das Batteriemanagementsystem 200 aktiv unterbrochen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Batteriesystem
- 5: Energiespeicher, Lithium-Ionen-Akkumulator
- 6: Energiespeicherzelle, Zellpaket
- 10: Komponente, Wechselrichter

- 150: Energieversorgungsvorrichtung
- 151: Versorgungseinheit, Gleichspannungswandler
- 160: Erhaltungsvorrichtung
- 161: Steuerungsmittel
- 170: Aktivierungsvorrichtung
- 171: Zeitschaltung
- 172: Schaltelement, MOSFET

- 200: Batteriemanagementsystem
- 201: elektrische Verbindungskontakte zu 10
- 202: Kontakte zu 6
- 203: Platine
- 204: Schnittstellen

- 215: Halbleiterschalteinheit
- 215.1: Erste Halbleiterschalteinheit
- 215.2: Zweite Halbleiterschalteinheit

- 220: Sicherheitsschalteinheit

- 230: Überwachungsvorrichtung
- 231: Überwachungseinheit
- 231.1: Erste Überwachungseinheit
- 231.2: Zweite Überwachungseinheit
- 231.3: Dritte Überwachungseinheit

- 233: Auswerte-Steuerungseinheit
- 234: Datenspeicher

- 240: Überstromschutzeinrichtung

- 300: Stromkreis
- 302: Pluszweig, positiver Strompfad
- 303: Minuszweig, negativer Strompfad

- 400: Verfahren
- 400.1: Erster Verfahrensschritt
- 400.2: Zweiter Verfahrensschritt
- 400.3: Dritter Verfahrensschritt

- S: Schalteinheit
- S1: Schalteinheit
- R1: Widerstand
- C1: Kondensator
- C2: Kondensator
- C3: Kondensator

- RV: Verbraucherwiderstand

## Patentansprüche

1. Energieversorgungsvorrichtung (150) für ein Batteriemanagementsystem (200) eines Batteriesystems (1), insbesondere eines wiederaufladbaren Lithium-Batteriesystems (1), wobei die Energieversorgungsvorrichtung (150)
eine Erhaltungsvorrichtung (160) zur Erhaltung einer Energieversorgung für das Batteriemanagementsystem (200) umfasst, wobei
die Erhaltungsvorrichtung (160) ein Steuerungsmittel (161) zur Ansteuerung aufweist, und
die Erhaftungsvorrichtung (160) über das Steuerungsmittel (161) derart mit dem Batteriemanagementsystem (200) verbindbar ist, dass eine Erhaltung und Unterbrechung der Energieversorgung durch das Batteriemanagementsystem (200) aktiv durchführbar ist,
**dadurch gekennzeichnet,**
**dass** eine Aktivierungsvorrichtung (170) zur impulsartigen Initiierung der Energieversorgung des Batteriemanagementsystems (200) vorgesehen ist, wobei die Aktivierungsvorrichtung (170) eine Zeitschaltung (171) aufweist, um nach einer vorbestimmten Zeit die impulsartige Initiierung der Energieversorgung zu unterbrechen.

2. Energieversorgungsvorrichtung (150) nach Anspruch 1,
**dadurch gekennzeichnet,**
**dass** die Energieversorgung automatisiert oder ausschließlich manuell durch eine insbesondere manuelle Aktivierung der Aktivierungsvorrichtung (170) herstellbar ist.

3. Energieversorgungsvorrichtung (150) nach Anspruch 2,
**dadurch gekennzeichnet,**
**dass** die Aktivierungsvorrichtung (170) die Zeitschaltung (171) mit einem elektrischen und/oder elektronischen Schaltelement (172) aufweist, um nach der vorbestimmten Zeit die impulsartige Initiierung der Energieversorgung zu unterbrechen.

4. Energieversorgungsvorrichtung (150) nach Anspruch 2 oder 3,
**dadurch gekennzeichnet,**
**dass** das Batteriemanagementsystem (200) über das Steuerungsmittel (161) derart elektrisch mit der Aktivierungsvorrichtung (170) und/oder der Erhaltungsvorrichtung (160) verbunden ist, dass nur während der impulsartigen Initiierung der Energieversorgung durch die Aktivierungsvorrichtung (170) das Batteriemanagementsystem (200) die Erhaltung der Energieversorgung aktivieren kann.

5. Energieversorgungsvorrichtung (150) nach einem der vorhergehenden Ansprüche,
**dadurch gekennzeichnet,**
**dass** eine Versorgungseinheit (151), insbesondere ein Gleichspannungswandler (151) vorgesehen ist, welche / welcher elektrisch mit dem Batteriemanagementsystem (200) zur Energieversorgung verbunden ist, wobei die Erhaltungsvorrichtung (160) elektrisch mit der Versorgungseinheit (151) verbunden ist, um eine Energieversorgung zu bewirken.

6. Batteriemanagementsystem (200) für ein Batteriesystem (1), insbesondere für ein wiederaufladbares Lithium-Batteriesystem (1), mit einer Energieversorgungsvorrichtung (150), wobei die Energieversorgungsvorrichtung (150) eine Erhaltungsvorrichtung (160) zur Erhaltung einer Energieversorgung für das Batteriemanagementsystem (200) umfasst, wobei
die Erhaltungsvorrichtung (160) ein Steuerungsmittel (161) zur Ansteuerung aufweist, und
die Erhaltungsvorrichtung (160) über das Steuerungsmittel (161) derart ansteuerbar ist, dass eine Erhaltung und Unterbrechung der Energieversorgung durch das Batteriemanagementsystem (200) aktiv durchführbar ist
**dadurch gekennzeichnet,**
**dass** eine Aktivierungsvorrichtung (170) zur impulsartigen Initiierung der Energieversorgung des Batteriemanagementsystems (200) vorgesehen ist, wobei die Aktivierungsvorrichtung (170) eine Zeitschaltung (171) aufweist, um nach einer vorbestimmten Zeit die impulsartige Initiierung der Energieversorgung zu unterbrechen.

7. Batteriemanagementsystem (200) nach Anspruch 6,
**dadurch gekennzeichnet,**
**dass** die Energieversorgungsvorrichtung (150) und/oder die Erhaltungsvorrichtung (160) und/oder eine Aktivierungsvorrichtung (170) und/oder eine Versorgungseinheit (151) auf einer Platine (203) des Batteriemanagementsystems (200) angeordnet und/oder elektrisch miteinander direkt und/oder indirekt verbunden sind.

8. Batteriemanagementsystem (200) nach Anspruch 6 oder 7,
**dadurch gekennzeichnet,**
**dass** eine Energieversorgungsvorrichtung (150) nach einem der Ansprüche 1 bis 5 vorgesehen ist.

9. Verfahren (400) zum Betreiben eines Batteriemanagementsystems (200) für ein Batteriesystem (1), insbesondere für ein wiederaufladbares Lithium-Batteriesystem (1), insbesondere mit einer Energieversorgungsvorrichtung (150), wobei das Batteriemanagementsystem (200) eine Erhaltung und Unterbrechung einer Energieversorgung des Batteriemanagementsystems (200) aktiv durchführt,
**dadurch gekennzeichnet,**
**dass** eine impulsartige Initiierung der Energieversorgung durch eine Aktivierungsvorrichtung (170) manuell aktiviert wird und derart erfolgt, dass während einer Initiierungsphase die Energieversorgung des Batteriemanagementsystems (200) hergestellt ist, wobei
die Aktivierungsvorrichtung (170) eine Zeitschaltung (171) aufweist, um nach einer vorbestimmten Zeit die impulsartige Initiierung der Energieversorgung zu unterbrechen.

10. Verfahren (400) nach Anspruch 9,
**dadurch gekennzeichnet,**
**dass** das Batteriemanagementsystem (200) Abschaltbedingungen ermittelt, insbesondere durch Messungen am Batteriesystem (1), insbesondere zur Ermittlung einer Tiefenentladung des Batteriesystems (1), wobei in Abhängigkeit von den Abschaltbedingungen entweder eine Erhaltung oder eine automatische Unterbrechung der Energieversorgung des Batteriemanagementsystems (200) erfolgt.

11. Verfahren (400) nach Anspruch 10,
**dadurch gekennzeichnet,**
**dass** nach der Initiierungsphase die Energieversorgung nur dann erhalten wird, wenn eine Erhaltung der Energieversorgung aktiv durch das Batteriemanagementsystem (200) während der Initiierungsphase erfolgt ist.

12. Verfahren (400) nach Anspruch 10 oder 11,
**dadurch gekennzeichnet,**
**dass** nach der Initiierungsphase die Energieversorgung solange erhalten wird, bis die Energieversorgung entweder manuell oder aktiv durch das Batteriemanagementsystem (200) unterbrochen wird.

13. Verfahren (400) nach einem der Ansprüche 9 bis 12,
**dadurch gekennzeichnet,**
**dass** eine Energieversorgungsvorrichtung (150) nach einem der Ansprüche 1 bis 5 und/oder ein Batteriemanagementsystem (200) nach einem der Ansprüche 6 bis 8 Verwendung findet.

## Claims

1. An energy supply device (150) for a battery management system (200) of a battery system (1), in particular of a rechargeable lithium battery system (1), wherein the energy supply device (150)
comprises a preservation device (160) for preserving an energy supply for the battery management system (200), wherein
the preservation device (160) comprises a control means (161) for controlling, and
the preservation device (160) is connectable to the battery management system (200) via the control means (161) such that a preservation and an interruption of the energy supply by the battery management system (200) can be actively carried out,
**characterized in that**
an activation device (170) is provided for the pulse-like initiation of the energy supply of the battery management system (200), wherein the activation device (170) has a timer (171) in order to interrupt the pulse-like initiation of the energy supply after a predetermined time.

2. The energy supply device (150) according to claim 1,
**characterized in that**
the energy supply can be produced automatically or exclusively manually by a in particular manual activation of the activation device (170).

3. The energy supply device (150) according to claim 2,
**characterized in that**
the activation device (170) has the timer (171) with an electrical and/or electronic switching element (172) in order to interrupt the pulse-like initiation of the energy supply after the predetermined time.

4. The energy supply device (150) according to claim 2 or 3,
**characterized in that**
the battery management system (200) is electrically connected to the activation device (170) and/or the preservation device (160) via the control means (161) such that the battery management system (200) can only activate the preservation of the energy supply during the pulse-like initiation of the energy supply by the activation device (170).

5. The energy supply device (150) according to one of the preceding claims,
**characterized in that**
a supply unit (151), in particular a DC converter (151) is provided, which is electrically connected to the battery management system (200) for the energy supply, wherein the preservation device (160) is electrically connected to the supply unit (151) in order to effect an energy supply.

6. A battery management system (200) for a battery system (1), in particular for a rechargeable lithium battery system (1), having an energy supply device (150), wherein the energy supply device (150) comprises a preservation device (160) for preserving an energy supply for the battery management system (200), wherein the preservation device (160) has a control means (161) for control, and the preservation device (160) is controllable via the control means (161) such that a preservation and interruption of the energy supply by the battery management system (200) can be actively carried out
**characterized in that**
an activation device (170) is provided for the pulse-like initiation of the energy supply of the battery management system (200), wherein the activation device (170) has a timer (171) in order to interrupt the pulse-like initiation of the energy supply after a predetermined time.

7. The battery management system (200) according to claim 6,
**characterized in that**
the energy supply device (150) and/or the preservation device (160) and/or an activation device (170) and/or a supply unit (151) are arranged on a circuit board (203) of the battery management system (200) and/or are electrically connected to each another directly and/or indirectly.

8. The battery management system (200) according to claim 6 or 7,
**characterized in that**
an energy supply device (150) according to one of claims 1 to 5 is provided.

9. A method (400) for operating a battery management system (200) for a battery system (1), in particular for a rechargeable lithium battery system (1), in particular having an energy supply device (150), wherein the battery management system (200) actively preserves and interrupts an energy supply of the battery management system (200),
**characterized in that**
a pulse-like initiation of the energy supply is activated manually by an activation device (170) and takes place such that the energy supply of the battery management system (200) is produced during an initiation phase, wherein
the activation device (170) has a timer (171) in order to interrupt the pulse-like initiation of the energy supply after a predetermined time.

10. The method (400) according to claim 9,
**characterized in that**
the battery management system (200) determines switch-off conditions, in particular by measurements on the battery system (1), in particular for determining a deep discharge of the battery system (1), wherein, depending on the switch-off conditions, either a preservation or an automatic interruption of the energy supply of the battery management system (200) is performed.

11. The method (400) according to claim 10,
**characterized in that**
after the initiation phase, the energy supply is preserved only when a preservation of the energy supply has been actively performed by the battery management system (200) during the initiation phase.

12. The method (400) according to claim 10 or 11,
**characterized in that**
after the initiation phase, the energy supply is preserved until the energy supply is either manually or actively interrupted by the battery management system (200).

13. The method (400) according to one of claims 9 to 12,
**characterized in that**
an energy supply device (150) according to one of claims 1 to 5 and/or a battery management system (200) according to one of claims 6 to 8 is used.

## Revendications

1. Dispositif d'alimentation en énergie (150) pour un système de gestion de batterie (200) d'un système de batterie (1), en particulier d'un système de batterie (1) au lithium rechargeable, le dispositif d'alimentation en énergie (150) comprenant un dispositif de maintien (160) pour le maintien d'une alimentation en énergie pour le système de gestion de batterie (200),
le dispositif de maintien (160) présentant un moyen de commande (161) pour la commande, et
le dispositif de maintien (160) pouvant être raccordé au système de gestion de batterie (200) par le biais du moyen de commande (161) de telle manière qu'un maintien et une interruption de l'alimentation en énergie peuvent être effectués de manière active par le système de gestion de batterie (200), **caractérisé en ce**
**qu'**un dispositif d'activation (170) est prévu pour l'amorçage par impulsion de l'alimentation en énergie du système de gestion de batterie (200),
le dispositif d'activation (170) présentant un circuit de temporisation (171), pour interrompre l'amorçage par impulsion de l'alimentation en énergie après un temps prédéterminé.

2. Dispositif d'alimentation en énergie (150) selon la revendication 1,
**caractérisé en ce que**
l'alimentation en énergie peut être établie de manière automatique ou exclusivement manuelle par une activation en particulier manuelle du dispositif d'activation (170).

3. Dispositif d'alimentation en énergie (150) selon la revendication 2,
**caractérisé en ce que**
le dispositif d'activation (170) présente le circuit de temporisation (171) doté d'un élément de commutation (172) électrique et/ou électronique, pour interrompre l'amorçage par impulsion de l'alimentation en énergie après un temps prédéterminé.

4. Dispositif d'alimentation en énergie (150) selon la revendication 2 ou 3,
**caractérisé en ce que**
le système de gestion de batterie (200) est raccordé électriquement au dispositif d'activation (170) et/ou au dispositif de maintien (160) par le biais du moyen de commande (161) de telle manière que le système de gestion de batterie (200) peut activer le maintien de l'alimentation en énergie uniquement pendant l'amorçage par impulsion de l'alimentation en énergie par le dispositif d'activation (170).

5. Dispositif d'alimentation en énergie (150) selon l'une des revendications précédentes,
**caractérisé en ce**
**qu'**une unité d'alimentation (151), en particulier un convertisseur continu-continu (151), est prévu(e), qui est raccordé(e) électriquement au système de gestion de batterie (200) pour l'alimentation en énergie, le dispositif de maintien (160) étant raccordé électriquement à l'unité d'alimentation (151) pour réaliser une alimentation en énergie.

6. Système de gestion de batterie (200) pour un système de batterie (1), en particulier pour un système de batterie (1) au lithium rechargeable, doté d'un dispositif d'alimentation en énergie (150), le dispositif d'alimentation en énergie (150) comprenant un dispositif de maintien (160) pour le maintien d'une alimentation en énergie pour le système de gestion de batterie (200), le dispositif de maintien (160) présentant un moyen de commande (161) pour la commande, et
le dispositif de maintien (160) pouvant être commandé par le biais du moyen de commande (161) de telle manière qu'un maintien et une interruption de l'alimentation en énergie peuvent être effectués de manière active par le système de gestion de batterie (200),
**caractérisé en ce**
**qu'**un dispositif d'activation (170) est prévu pour l'amorçage par impulsion de l'alimentation en énergie du système de gestion de batterie (200),
le dispositif d'activation (170) présentant un circuit de temporisation (171), pour interrompre l'amorçage par impulsion de l'alimentation en énergie après un temps prédéterminé.

7. Système de gestion de batterie (200) selon la revendication 6,
**caractérisé en ce que**
le dispositif d'alimentation en énergie (150) et/ou le dispositif de maintien (160) et/ou un dispositif d'activation (170) et/ou une unité d'alimentation (151) sont disposés sur une platine (203) du système de gestion de batterie (200) et/ou sont raccordés électriquement les uns aux autres de manière directe et/ou indirecte.

8. Système de gestion de batterie (200) selon la revendication 6 ou 7,
**caractérisé en ce**
**qu'**un dispositif d'alimentation en énergie (150) selon l'une des revendications 1 à 5 est prévu.

9. Procédé (400) de fonctionnement d'un système de gestion de batterie (200) pour un système de batterie (1), en particulier pour un système de batterie (1) au lithium rechargeable, en particulier doté d'un dispositif d'alimentation en énergie (150), le système de gestion de batterie (200) effectuant un maintien et une interruption d'une alimentation en énergie du système de gestion de batterie (200) de manière active,
**caractérisé en ce**
**qu'**un amorçage par impulsion de l'alimentation en énergie est activé manuellement par un dispositif d'activation (170) et est effectué de telle manière que l'alimentation en énergie du système de gestion de batterie (200) est établie pendant une phase d'amorçage,
le dispositif d'activation (170) présentant un circuit de temporisation (171), pour interrompre l'amorçage par impulsion de l'alimentation en énergie après un temps prédéterminé.

10. Procédé (400) selon la revendication 9,
**caractérisé en ce que**
le système de gestion de batterie (200) détermine des conditions de mise hors circuit, en particulier par des mesures effectuées sur le système de batterie (1), en particulier pour déterminer une décharge profonde du système de batterie (1), dans lequel soit un maintien, soit une interruption automatique de l'alimentation en énergie du système de gestion de batterie (200) est effectué(e) en fonction des conditions de mise hors circuit.

11. Procédé (400) selon la revendication 10,
**caractérisé en ce que**
après la phase d'amorçage, l'alimentation en énergie est maintenue uniquement quand un maintien de l'alimentation en énergie a été effectué de manière active par le système de gestion de batterie (200) pendant la phase d'amorçage.

12. Procédé (400) selon la revendication 10 ou 11,
**caractérisé en ce que**
après la phase d'amorçage, l'alimentation en énergie est maintenue jusqu'à ce que l'alimentation en énergie soit interrompue manuellement ou de manière active par le système de gestion de batterie (200).

13. Procédé (400) selon l'une des revendications 9 à 12,
**caractérisé en ce**
**qu'**un dispositif d'alimentation en énergie (150) selon l'une des revendications 1 à 5 et/ou un système de gestion de batterie (200) selon l'une des revendications 6 à 8 est utilisé.
